# EUROPÄISCHE PATENTANMELDUNG

(11) **EP 2 561 951 A1**
(43) Veröffentlichungstag der Anmeldung: **27.02.2013**
(21) Anmeldenummer: 12005980.3
(22) Anmeldetag: 21.08.2012
(51) Int. Cl.: B23K 20/12, B23K 37/053, B23K 37/06

(54) **Verfahren und Anlage zum Herstellen eines Flansch-Rohr-Flansch-Elementes mittels Rührreibschweissen mit örtlichem Verformen des Stossbereiches der gehalteten Körper**

(30) Priorität: 24.08.2011 EP 11006908
(71) Anmelder: Wartmann Technologie AG, 4538 Oberbipp (CH)
(72) Erfinder: Schenk, Tobias, 5014 Gretzenbach (DE)
(74) Vertreter: Hannig, Wolf-Dieter

(57) **Zusammenfassung**

Die Erfindung betrifft ein Verfahren und eine Anlage zum Herstellen einer Stumpfstoßverbindung zwischen rotationssymmetrischen Körpern (1,2,3), beispielsweise Flansch-Rohr-Flansch- (1,2,3), Flansch-Rohr- (1,2;1,3) oder Rohr-Anordnungen (3), mittels Rührreibschweißen.

Die Aufgabe der Erfindung besteht darin, die Stumpfstoßverbindung von rührreibgeschweißten rotationssymmetrischen Körpern (1,2,3) derart zu verbessern, dass Abweichungen in der Unrundheit und Geradheit im Stoßbereich der rotationssymmetrischen Körper (1,2,3) unter Wegfall von Mess- und Einrichtvorgängen bei gleichzeitiger Erhöhung der Qualität, der Reduzierung der Fertigungszeiten und der Einsparung von Material ausgeschaltet werden.

Diese Aufgabe wird dadurch gelöst, dass dass nach dem Zentrieren ein örtliches Verformen des Stoßbereiches der unter axialen Einspannkräften gehaltenen Körper (1,2,3) durch ein radiales Innenformdrücken und Richten mit einer Zentrier-, Innenform-, Richt- und Spannscheibe mittels kniehebelartiger Kraftverstärkung der Zentrierkraft auf eine das örtliche Verformen bewirkende Innenformkraft durchgeführt wird und diese Innenformkraft im Stoßbereich der Körper (1,2,3) solange aufrechterhalten werden bis das Rührreibschweißen beendet ist.

## Beschreibung

Die Erfindung betrifft ein Verfahren zum Herstellen einer Stumpfstoßverbindung zwischen rotationssymmetrischen Körpern, beispielsweise an einer Flansch-Rohr-Flansch-, Flansch-Rohr- oder Rohr-Rohr-Anordnung, mittels Rührreibschweißen, bei dem die rotationssymmetrischen Körper auf Stoß durch Einspannmittel fixiert und um eine gemeinsame Längsachse durch Antriebsmittel in Rotation versetzt werden, während ein auf jeden Stumpfstoß mit Anpresskraft absenkbarer rotierender Schaft mit einem gegenüber dem Schaft in den oder aus dem Stumpfstoß vorschieb- oder zurückziehbaren rotierenden Stift eines in x-, y- und z-Richtung zustellbaren Rührreibschweißwerkzeugs die Materialbereiche des Stoßes erweicht, rührt und innerhalb eines Umlaufes miteinander verbindet, wobei die Reaktionskraft für die Anpresskraft von einer eine unter dem Stumpfstoß gegen die Innenwandung der Körper spann- und lösbaren Schweißbadsicherung aufgebracht wird, und die Rotationsgeschwindigkeit der Körper, die Drehgeschwindigkeit und die Anpresskraft des Stiftes und des Schaftes von einer Steuerung zentral eingestellt werden.

Die Erfindung betrifft weiterhin eine Anlage zum Herstellen einer Stumpfstoßverbindung zwischen rotationssymmetrischen Körpern mittels Rührreibschweißens, mit Einspanneinheiten, an denen je ein an einer Aufnahme fixierter rotationssymmetrischer Körper durch einen Direktantrieb drehbar um seine mit der Drehachse der Aufnahme zusammenfallende Längsachse angeordnet ist, wobei die Einspanneinheiten zueinander in Flucht auf die Längsachsen ausgerichtet sind und eine gemeinsame Drehachse aufspannen, wobei die Einspanneinheit ortsfest und die andere gegen letztere zum axialen Einspannen eines rotationssymmetrischen Körpers zwischen den an den Aufnahmen fixierten rotationssymmetrischen Körpern unter Bildung von Stumpfstößen durch einen Antrieb auf einem Laufschienenpaar verfahrbar ausgebildet ist, so dass der eingespannte rotationssymmetrische Körper mit dem an der Aufnahme fixierten Körpern eine Rotation um die Längsachse ausführen kann, einem jeder Einspanneinheit zugeordneten Rührreibschweißwerkzeug, das in Bezug auf den jeweiligen Stumpfstoß durch einen Kreuzschlitten horizontal und vertikal zustellbar ist und einen senkrecht zur Längsachse drehbaren, von einem Gehäuse aufgenommenen Werkzeughalter aufweist, in dem ein mit einer Schulter versehener Schaft mit eingesetztem Rührreibschweißstift angeordnet ist, einer im Inneren der Körper unterhalb des Stumpfstoßes angeordneten Schweißbadsicherung, und einer Steuerung, die mit den Direktantrieben der Aufnahmen und den Antrieben für das Rührreibschweißwerkzeug zum Einstellen der Anpresskräfte und der Rotationsgeschwindigkeit der Körper, sowie der Zustellung des Rührreibschweißwerkzeugs und dessen Drehgeschwindigkeit in Verbindung steht.

### Stand der Technik

Aus der EP 1 046 453 B1 ist eine Reibschweißverbindungs-Vorrichtung zum Verbinden einer Mehrzahl von aneinander liegenden Elementen aus Aluminium oder Aluminiumlegierungen bekannt. Die Vorrichtung weist Abstützrollen zum Abstützen der aneinander liegenden Elemente, einen Antriebsmotor zum Rotieren der aneinander liegenden Elemente um ihre Achse und eine Verbindungsvorrichtung mit einem drehbaren Senkstift auf, der benachbart zu dem aneinander liegenden Bereich der Elemente angeordnet ist, wobei der Senkstift den aneinander liegenden Bereich der Elemente aufweicht und rührt, um die aneinander liegenden Elemente innerhalb eines Umlaufs miteinander zu verschweißen. Die Vorrichtung hat drehbare Einspannbereiche zum Einspannen und axialen Drücken der gegenüberliegenden Elemente, wobei der eine Einspannbereich ortsfest, der andere jedoch gegen letzteren Verschiebbar ist. Die Einspannbereiche sind so ausgebildet, dass sie die Enden eines Auto-Aufhängarms von außen formschlüssig umfassen können. Hierzu besitzt der eine Einspannarm einen konvex ausgebildeten inneren Bereich, in dem das u-förmige Ende einer Gabel eingepasst ist, und der andere Einspannarm weist dagegen einen konkaven inneren Bereich auf, in dem das andere Ende der Gabel eingepasst ist.
Dieser bekannte Stand der Technik gewährleistet zwar ein sicheres Einpassen der Bauteilenden in den Einspannarmen, jedoch keine genaue Zentrierung den Längsachsen der aneinander liegenden Bauteile nach den Drehachsen der Einspannarme, was für rotationssymmetrische Bauteile wie Rohre und Flansche unbedingte Voraussetzung ist.
Außerdem treten bei rotationssymmetrischen Körpern großer Längen erhebliche Abweichungen in der Geradheit und Rundheit auf, die insbesondere bei Stumpfstoßverbindungen dieser Körper zu Fehlern in der Schweißverbindung führen können. Derartige Toleranzabweichungen können mit diesem Stand der Technik nicht mehr beherrscht werden.
Des Weiteren ist diese bekannte Vorrichtung durch die Vielzahl von Stützeinrichtungen aufwändig und auch wartungsintensiv. Die Stützeinrichtungen sind außerdem nicht in der Lage, die Funktion der Schweißbadsicherung im Stoßbereich des erwärmten und erweichten Materials sicherzustellen, so dass die Gefahr besteht, dass das erweichte Material aus der Fuge fällt und die darunter befindlichen Stützeinrichtungen in ihrer Funktion beeinträchtigt wird.

Schweißbadsicherungen für den Verbindungsschweißen von Rohren sind hinlänglich bekannt (US 6 119 916 A). Sie setzen sich aus einem im Rohrinneren angeordneten Ringsystem aus einer Vielzahl entlang des Innenumfangs verteilter Schweißschuhe zusammen, die mittels Federn gegen die innere Rohrwandung durch einen Spannmechanismus drücken. Der Spannmechanismus wird durch eine von einem pneumatischen, hydraulischen oder elektrischen Antrieb ausgelöste Radialbewegung entweder in seine Spann- oder Entspannlage gebracht.
Ein solches Ringsystem aus Schweißschuhen mag zwar eine sichere Positionierung der Schweißbadsicherung am Schweißspalt ermöglichen, jedoch ist es mit diesem Stand der Technik nicht möglich, weder unterschiedliche Rohrovalitäten der beiden im Stumpfstoß liegenden Rohrenden noch die Geradheit der Rohre zu beeinflussen.
Im Übrigen ist diese bekannte Schweißbadsicherung auch nicht für das Verbindungsschweißen an rotierenden Rohren geeignet wie es beim Rührreibschweißen allgemein bekannt ist.
Die Stumpfstoßverbindung zweier mittels Rührreibschweißen zu verbindender rotationssymmetrischer Körper, beispielsweise eine Rohr-Rohr-Verbindung oder Flansch-Rohr-FlanschVerbindung erfordert ein Halten der beiden rotierenden Rohrelemente in definierter Lage während der gesamten Rührreibschweißoperation, wobei die Stoßflächen in der Stoßfuge keinen Luftspalt und zumindest im Stoßbereich voneinander keine Unrundheit besitzen dürfen sowie die Wanddicken der beiden Körper in sehr engen Toleranzen übereinstimmen müssen. Mit anderen Worten bedeutet dies, dass die Stumpfstoßvorbereitung ursächlich für die Qualität einer Rührreibschweißverbindung von Rohrteilen ist, weil die Lage und Form des Stumpfstoßes unmittelbar die zum Rührreibschweißen erforderlichen Anpresskräfte beeinflusst.

Die DE 27 02 396 A1 beschreibt eine Vorrichtung zur Zentrierung und Drehung eines in einer Schweißmaschine mit einem Flansch zu verschweißenden Rohres. Diese Vorrichtung besteht aus zwei horizontal einander gegenüberliegend vorgesehenen Steuerschlitten und einem vertikalen Steuerschlitten, welche derart verstellbar angeordnet sind, dass das Rohr in Schweißstellung stets zur Drehachse des Flansches zentriert ist.
Diese bekannte Zentriereinrichtung hat einen komplizierten Aufbau und erfordert ein zeitaufwändiges Einrichten, so dass eine Serienfertigung mit hohen Kosten verbunden ist.

### Aufgabenstellung

Bei diesem Stand der Technik liegt der Erfindung die Aufgabe zugrunde, die Stumpfstoßverbindung von rührreibgeschweißten rotationssymmetrischen Körpern derart zu verbessern, dass Abweichungen in der Unrundheit und Geradheit im Stoßbereich der rotationssymmetrischen Körper unter Wegfall von Mess- und Einrichtvorgängen bei gleichzeitiger Erhöhung der Qualität, der Reduzierung der Fertigungszeiten und der Einsparung von Material ausgeschaltet werden.

Diese Aufgabe wird durch eine Vorrichtung der eingangs genannten Art mit den Merkmalen des Anspruches 1 und durch ein Verfahren mit den Merkmalen des Anspruches 11 gelöst.

Vorteilhafte Ausgestaltungen des Verfahrens und der Anlage sind den Unteransprüchen entnehmbar.

Kerngedanke der erfindungsgemäßen Lösung ist es, auftretende Abweichungen in der Rundheit und der Geradheit im Stoßbereich von rotationssymmetrischen Körpern, beispielsweise einer Flansch-Rohr-Flansch-Anordnung, die mittels Rührreibschweißen verbunden werden sollen, durch ein dem Zentrieren nachfolgendes örtlichen Verformen der Stoßbereiche mindestens zweier unter axialen Einspannkräften gehaltener Körper durch ein radiales Innenformdrücken und Richten mit einer Zentrier-, Innenform-, Richt- und Spannscheibe unter kniehebelartiger Kraftverstärkung der Zentrierkraft auf eine das örtliche Verformen bewirkende Innenformkraft nahezu zu eliminieren und diese Innenformkraft im Stoßbereich der Körper solange aufrechtzuerhalten bis das Rührreibschweißen beendet ist.
Dies wird durch folgende Schritte erreicht:
a) Erzeugen einer nahezu übereinstimmenden Rundheit und Geradheit im Stoßbereich der nichtrotierenden aneinander auf Stumpfstoß eingespannten Körper mit der Zentrier-, Innenform-, Richt- und Spannscheibe, wobei der Stumpfstoß in eine definierte Lage und Form in Abhängigkeit der Abmessungen der Körper für den Rührreibschweißstift des Rührreibschweißwerkzeugs gebracht wird;
b) Ausfahren des Rührreibschweißstiftes aus dem Schaft um ein entsprechendes Maß durch eine Hubbewegung relativ zum Schaft vor dem Absenken des Rührreibschweißwerkzeugs auf den Stumpfstoß der rotierenden Körper, um eine in Abhängigkeit der eingestellten Lage, Form und Geometrie des Stumpfstoßes definierte Eindringtiefe zu erreichen;
c) Vertikales Verfahren des Schaftes mit ausgefahrenem Stift bis die Schulter des Schaftes auf den Stumpfstoß der rotierenden Körper aufsetzt und eine definierte Anpresskraft erreicht, wobei die eingespannten Körper um ihre Längsachse solange rotieren bis der Stift im Stumpfstoß die erforderliche Rührreibschweißtemperatur erzeugt hat;
d) Durchführen des Rührreibschweißens während eines einzigen Umlaufes der eingespannten rotationssymmetrischen Körper um mindestens 360° unter Einhaltung einer axialen Anpresskraft von 6000 bis 10000 N, einer Rotationsgeschwindigkeit von 1000 bis 1800 min⁻¹ und einer Vorschubgeschwindigkeit von 0,3 bis 1 m/min;
e) Einziehen des Stiftes in den Schaft unter Einhaltung der Anpresskraft der Schulter auf den Stumpfstoß und Verfahren des Rührreibschweißwerkzeugs aus der Flucht des Stumpfstoßes um eine definierte Wegstrecke während die eingespannten Körper um etwa 20° weiterrotieren und Anheben des Rührreibschweißwerkzeugs in seine Ausgangslage;
f) Zurückfahren des Rührreibschweißwerkzeugs um die Wegstrecke gemäß Schritt e) und
g) Entspannen und Lösen der Zentrier-, Innenform-, Richt- und Spannscheibe, Entnehmen der rührreibgeschweißten Körper und Beginn einer neuen Operation.

In einer bevorzugten Ausgestaltung des erfindungsgemäßen Verfahrens wird das Zentrieren, Innenformdrücken, Richten, und Spannen der rotationssymmetrischen Körper mit der Innenform-, Richt-, Zentrier- und Spannscheibe in einem zweistufigen Vorgang durchgeführt, bei dem in einem ersten Schritt etwa 65 bis 70% des zum Stoßbereich gehörenden Innenumfangs der Körper mittels durch Lücken voneinander beabstandeter Primärbacken mit einer Zentrierkraft zwischen 2000 N bis 6000 N zum Zentrieren beaufschlagt und in einem zweiten Schritt die erforderlichen Innenformkräfte auf den gesamten Innenumfang im Stoßbereich durch ein radiales Ausfahren von Sekundärbacken in die Lücken zwischen den Primärbacken mittels kniehebelartiger Kraftverstärkung auf mindestens das Zehnfache der Zentrierkraft aufgebracht werden, wobei der Stirnbereich der Zentrier-, Innenform-, Richt- und Spannscheibe eine geschlossene Fläche für das Innenformdrücken und Richten auf eine übereinstimmende Geometrie und Form im Stoßbereich bildet, und dass beim Lösen der Scheibe zunächst die Sekundärbacken aus dem Bereich zwischen den Primärbacken und dann die Primärbacken entgegengesetzt zur Innenwand der Körper eingefahren werden.

In einer weiteren bevorzugten Ausgestaltung des erfindungsgemäßen Verfahrens wird als Einspannspannmittel für die Körper je eine von durch einen Direktantrieb abgetriebene, um die Längsachse der Körper drehbare Aufnahme umfassende, gegeneinander ausgerichteter Einspanneinheiten eingesetzt, die entlang der Drehachsen der Aufnahmen die gemeinsame Längsachse aufspannen, wobei eine Einspanneinheit ortsfest ist und die andere gegen letztere in Flucht der Drehachsen unter Bildung des Stumpfstoßes so verfahren wird, dass die eingespannten Körper gemeinsam in Rotation versetzt werden können.
Die rotationssymmetrischen Körper werden in ihre Stoßlage gebracht, indem zunächst die rotationssymmetrischen Körper, beispielsweise Flansche, so an den Aufnahmen befestigt werden, dass ihre Längsachse mit den Drehachsen der jeweiligen Einspanneinheit zusammenfallen, und anschließend die Längsachse des anderen rotationssymmetrischen Körpers wie beispielsweise ein Rohr auf die Drehachsen der Einspanneinheiten zentriert wird.
Dies hat den außerordentlichen Vorteil, dass Flansch-Rohr-Flansch-Elemente mit unterschiedlichen Durchmessern ohne ein aufwändiges und zeitintensives Einrichten der Flansche und des Rohres hergestellt werden können. Hierzu haben die Aufnahmen Bohrungen auf Lochkreisen mit an die verschiedenen Flanschgrößen angepasstem Durchmesser. Die entsprechenden Flansche werden an den Aufnahmen durch Verschraubung befestigt, die Zentrier-, Innenform-, Richt- und Spannscheibe in das Innere des Stirnbereichs von Flansch und Rohr eingebracht und der Zentrier-, Innenform-, Richt- und Spannvorgang wie zuvor beschrieben durchgeführt.

Vorteilhaft ist, wenn als Antriebsmittel für die Aufnahmen Synchronmotore eingesetzt werden, welche die Aufnahmen synchron mit gleicher Drehzahl antreiben, so dass die Stumpfstöße an beiden Enden der rotationssymmetrischen Körper simultan bearbeitet werden können. Das gleichzeitige Rührreibschweißen an beiden Enden des rotationssymmetrischen Körpers verkürzt die Fertigungszeit erheblich.

Für das axiale Einspannen der rotationssymmetrischen Körper hat es sich als zweckmäßig erwiesen, die Anpresskraft pneumatisch, hydraulisch oder elektrisch durch Druckzylinder zu erzeugen, wobei die Anpresskraft in Abhängigkeit der Dimensionierung der rotationssymmetrischen Körper mit der Steuerung auf Werte zwischen 5000 bis 8000 N eingestellt wird.

Eine weitere bevorzugte Ausführungsform des erfindungsgemäßen Verfahrens sieht vor, dass die Winkellage der Rotation der rotationssymmetrischen Körper um ihre Längsachse durch einen Winkellagegeber der Direktantriebe ermittelt und an die Steuerung zum Zustellen des Rührreinschweißwerkzeugs in x-, y- und z-Richtung weitergeleitet wird.

In einer weiteren vorteilhaften Ausgestaltung des erfindungsgemäßen Verfahrens wird die Lage des Stumpfstoßes der aneinander gespannten rotationssymmetrischen Körper durch eine Messoperation, eine Anordnung des Stoßes in einer definierten Fix-Lage oder durch Abtasten des Stumpfstoßes durch je einen Sensor in Rotationsrichtung, Ermitteln der momentanen Lage des Stoßes durch Verarbeiten der Sensordaten mit einer Auswerteelektronik und Weiterleiten dieser Daten an die Steuerung zur Regelung der Position des Reibrührschweißwerkzeugs in x-, y- und z-Richtung. Als Sensor kann vorzugsweise ein Laser-Scanner, ein Bild-Sensor oder Linien-Laser eingesetzt werden.

Das erfindungsgemäße Verfahren ist besonders zur Herstellung von Flansch-Rohr-Flansch-, Flansch-Rohr- oder Rohr-Rohr-Anordnungen aus Leichtmetallen oder Leichtmetalllegierungen wie Aluminium, Aluminium-Magnesium-, Aluminium-Magnesium-Silizium-Legierungen, Kupferlegierungen oder andere Legierungen aus Eisen oder Nichteisenmetalle geeignet, kann aber auch für andere rotationssymmetrische Körper wie Rohr-Rohr- oder Flansch-Rohr-Elemente eingesetzt werden.

Die Aufgabe wird weiter durch eine Anlage dadurch gelöst, dass die Schweißbadsicherung als eine Zentrier-, Innenform-, Richt- und Spannscheibe zum Erzeugen einer übereinstimmenden Rundheit und Geradheit im Stoßbereich der aneinanderstoßenden Körper ausgebildet ist, und dass dem Werkzeughalter des Rührreibschweißwerkzeugs eine Hubplatte zugeordnet ist, an deren vom Werkzeughalter abgewandten Unterseite eine den Schaft umfassendes Lager zur axial drehbaren Lagerung des Schaftes und mindestens zwei symmetrisch zum Schaft zwischen der dem Werkzeughalter zugewandten Oberseite der Hubplatte und der Gehäuseplatte angeordnete Hubmittel zum Ausführen einer gemeinsamen Hubbewegung von Hubplatte und Lager vorgesehen sind, wobei im Schaft der Rührreibschweißstift relativ zum Schaft axial verschiebbar angeordnet ist, derart, dass die Spitze des Rührreibschweißstiftes bei Ausführen der Hubbewegung von Hubplatte und Lager eine definierte Eindringtiefe in den Stumpfstoß in Abhängigkeit der Dickenabmessung der rotationssymmetrischen Körper und der Lage, Form und Geometrie des Stumpfstoßes erreicht.

Von besonderer Bedeutung zum Erreichen der definierten Lage des Rührreibschweißstifts im Stumpfstoß ist, dass der Werkzeughalter in Flucht seiner Rotationsachse eine Aufnahme aufweist, in der der Schaft drehfest fixiert ist, welcher seinerseits in Richtung der Rotationsachse eine Stiftaufnahme für den Rührreibschweißstift besitzt und in seiner Wandung mit diametral gegenüberliegenden langlochähnlichen Aussparungen versehen ist, in denen ein quer zur Rotationsrichtung angeordneter, den Rührreibschweißstift durchsetzender Zylinderstift axial geführt und im Lager in einem Lagerpaket aufgenommen ist, das ein Gehäuse für das Lagerpaket, ein oberes und unteres Axiallager, obere und untere Wellenscheiben und obere und untere Klemmscheiben umfasst, zwischen denen der Zylinderstift klemmend gehalten ist.
Die Länge und Lage der langlochähnlichen Aussparungen im Schaft bestimmen die erreichbare Endposition des Rührreibschweißstiftes im Stumpfstoß. Mit einem Satz von Schäften, die Aussparungen verschiedener Lage und Länge besitzen, kann die Eindringtiefe des Rührreibschweißstiftes in den Strumpfstoß variiert werden, so Körper mit unterschiedlichen Dickenabmessungen bearbeitet werden können.

Zum Ausführen der axialen Verschiebung des Rührreibschweißstiftes relativ zum Schaft sind besonders Hubmittel geeignet, die eine feinfühlige und exakte Zustellung wie pneumatische, hydraulische oder elektrische Hubzylinder ermöglichen.

Die Zentrier-, Innenform-, Richt- und Spannscheibe ist für den Rührreibschweißvorgang von zentraler Bedeutung, weil die Geometrie, Form und Lage des Stumpfstoßes von ihr direkt beeinflusst wird. Die Scheibe muss einerseits eine ausreichende Breite aufweisen und in den Innenbereich der rotationssymmetrischen Körper soweit hineinreichen, dass die mit der Scheibe erzeugten Kräfte vor dem Rührreibschweißen in der Lage sind, zumindest im Stoßbereich eine Unrundheit/Ovalität zwischen den beiden Körpern weitgehend zu eliminieren und eine Geradheit sowie Zentrierung zu erreichen. Andererseits muss die Scheibe den beim Rührreibschweißvorgang eintretenden Erweichungsvorgang entlang der Stoßfuge stabilisieren, ohne den erweichten Stumpfstoß axial zu verformen und ein einfaches Lösen ohne Nacharbeit zu ermöglichen.
Die Zentrier-, Innenform-, Richt- und Spannscheibe umfasst dazu:
a) einen Primärbackenkörper aus mindestens drei Primärbacken, die unter Bildung von Lücken kreissegmentförmig am Umfang der Scheibe angeordnet sind und von je einem sich in Richtung Zentrum der Scheibe erstreckendes hammerförmiges Halte- und Gabelelement radial gehalten sind, an der ein Primärhebel mit seinem einen Ende schwenkbar befestigt ist,
b) einen Sekundärbackenkörper aus mindestens drei Sekundärbacken, die von je einem sich in Richtung Zentrum der Scheibe erstreckenden Halte- und Gabelelement radial gehalten sind, an der ein Sekundärhebel mit seinem einen Ende schwenkbar befestigt ist, wobei die Sekundärbacken zueinander versetzt entlang des Umfangs so angeordnet sind, dass sie die Lücken zwischen zwei Primärbacken schließen können,
c) ein Trägerelement mit radial angeordneten Ausnehmungen zum Aufnehmen und Verschieben der Halte- und Gabelelemente der Primär- und Sekundärbacken in radialer Richtung,
d) einen senkrecht in Richtung Zentrum der Scheibe verschiebbaren Stößel, an dem die stößelseitigen Enden der Primär- und Sekundärhebel für die Primär- und Sekundärbacken schwenkbar gehalten sind,
e) einen pneumatischen, hydraulischen oder elektrischen Antrieb für den Stößel, um die Zentrier-, Innenform- und Richtkräfte zu erzeugen und die Primärbacken und Sekundärbacken radial gegen die inneren Flächen der aneinanderstoßenden Körper zum Erzeugen einer übereinstimmenden Rundheit und Geradheit im Stoßbereich der aneinanderstoßenden Körper zu spannen oder zu entspannen,

Der zweistufige Vorgang zum Zentrieren, Innenformdrücken, Richten und Spannen der rotationssymmetrischen Körper ergibt sich daraus, dass der Sekundärhebel gegenüber dem Primärhebel ein Längenverhältnis von mindestens 1 : 1,3 aufweist, wobei das stößelseitige Gelenk des Primärhebels um ein definiertes Maß gegenüber dem stößelseitigen Gelenk des Sekundärhebels in Richtung Primär- bzw. Sekundärbacken axial verschoben angeordnet ist und der Sekundärhebel in seiner Strecklage einen Anstellwinkel von 1 bis 2° aufweist, so dass das Zurückziehen der Sekundärbacken vor den Primärbacken beim Rückhub des Antriebs einsetzt. Dadurch gelangen zunächst die Primärbacken in ihre Spannlage und können den Zentriervorgang zwischen den aneinanderstoßenden rotationssymmetrischen Körpern mit einer Zentrierkraft durchführen, die vorzugsweise etwa 2000 bis 6000 N betragen.
Die Sekundärbacken erreichen ihre Endlage erst nachdem die Primärbacken ausgefahren sind, wodurch die gesamte Presskraft des Hubzylinders kniehebelartig verstärkt um etwa das Zehnfache auf den Stoßbereich wirkt und das örtliche Innenformdrücken und Richten bewirkt.

In einer bevorzugten Ausführungsvariante der erfindungsgemäßen Anlage ist das Rührreibschweißwerkzeug in y- und z-Richtung am Kreuzschlitten durch Servomotore und in y-Richtung an einer Spindel durch einen Motor verfahrbar angeordnet, wobei der das Rührreibschweißwerkzeug tragende Kreuzschlitten an einem Brückenträger festgelegt ist, der in Richtung Längsachse der Körper (x-Richtung) auf dem zwischen den Einspanneinheiten am Maschinenbett erlegten Laufschienenpaar durch einen Servomotor verfahrbar ausgebildet und mit einer pneumatischen Bremse versehen ist sowie eine pneumatische Einheit zur Stabilisierung aufweist. Dies ermöglicht einerseits, das Rührreibschweißwerkzeug mit Sensor positionsgenau auf die momentan ermittelte Lage des Stumpfstoßes in allen drei Raumrichtungen einzustellen und die zum Rührreibschweißen erforderlichen Anpresskräfte auf den Stumpfstoß aufzubringen sowie andererseits die gesamte Rührreibschweißeinheit zum Bearbeiten von verschiedenen langen Flanschen in Längsrichtung des Rohres zu verfahren und in dieser Position zu arretieren.

Das axiale Einspannen der rotationssymmetrischen Körper wird in einer weiteren Ausführungsform der erfindungsgemäßen Anlage dadurch möglich, dass die Aufnahme der verfahrbaren Einspanneinheit durch mindestens einen pneumatischen Druckzylinder in Flucht der Längsachse der Körper axial beaufschlagbar ausgebildet ist, wobei der Druckzylinder über ein Proportionalventil zur Einstellung der Anpresskraft mit der Steuerung verbunden ist.

Eine weitere bevorzugte Ausführungsform der erfindungsgemäßen Anlage sieht vor, dass die Steuerung in eine an ein externes Strom- und Pressluftnetz angeschlossene, in der ortsfesten Einspanneinheit angeordnete Hauptsteuerung und eine in der verfahrbaren Einspanneinheit angeordnete Nebensteuerung aufgeteilt ist, wobei die Hauptsteuerung über eine, die Daten- und Steuerleitungen und Pneumatikleitungen aufnehmende flexible Verbindungsleitung mit der Nebensteuerung zum Versorgen der verfahrbaren Einspanneinheit mit Strom und Pressluft sowie zur Übertragung von Steuerbefehlen und zum Datenaustausch in Verbindung steht.

Besonders vorteilhaft ist, wenn die Direktantriebe die Aufnahmen der ortsfesten und verfahrbaren Einspanneinheit Synchronmotore sind, die jeweils mit Winkellagegebern zur Ermittlung der Winkellage der Rotation der Körper versehen und durch eine separate Steuerleitung mit der Hauptsteuerung verbunden sind.
Die weiteren elektrischen und pneumatischen Antriebe in beiden Einspanneinheiten wie die Servomotore für die Kreuzschlitten und Rührreibschweißwerkzeuge, der Servomotor zum Verfahren der verschieblichen Einspanneinheit, der Antrieb für die Zentrier-, Innenform-, Richt- und Spannscheibe, die Hubmittel für den Rührreibschweißstift, die pneumatischen Bremsen und Einheiten für die Brückenträger der Kreuzschlitten, die pneumatischen Bremse der verfahrbaren Einspanneinheit sowie die Druckzylinder zum axialen Einspannen der rotationssymmetrischen Körper sind zweckmäßigerweise über ihre jeweilige Ansteuerelektronik und Proportionalventile durch eine weitere Steuerleitung mit der Hauptsteuerung verbunden.

In einer weiteren vorteilhaften Ausgestaltung der erfindungsgemäßen Anlage sind die Direktantriebe für die Aufnahmen der ortsfesten und verfahrbaren Einspanneinheit Synchronmotore, die jeweils mit Winkellagegebern zur Ermittlung der Winkellage der Rotation der Körper versehen und durch eine separate Steuerleitung mit der Hauptsteuerung verbunden sind.

Weiterhin ist von Vorteil, wenn jedem Rührreibschweißwerkzeug ein mit der Hauptsteuerung verbundener Sensor, beispielsweise ein Laser-Scanner, ein Bild-Sensor oder Linien-Laser, zugeordnet ist, dessen Auswerteelektronik mittels Graustufenanalyse die Lage des Stumpfstoßes in Rotationsrichtung ermittelt und diese an die Hauptsteuerung weiterleitet.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel für ein Flansch-Rohr-Flansch-Element näher erläutert werden.

Es zeigen

Fig. 1 eine schematische Darstellung der erfindungsgemäßen Anlage in Seitenansicht mit einer Flansch-Rohr-Flansch-Anordnung,

Fig. 2 eine Einzelheit A der Fig. 1 in vergrößerter Darstellung,

Fig. 3a und 3b Seitenansichten der Zentrier-, Innenform-, Richt- und Spannscheibe mit Verweis auf die Schnitte A-A, B-B, C-C und D-D,

Fig. 4 einen Schnitt A-A der Zentrier-, Innenform-, Richt- und Spannscheibe gemäß Fig. 3a,

Fig. 5 einen Schnitt B-B der Zentrier-, Innenform-, Richt- und Spannscheibe gemäß Fig.3a,

Fig. 6 einen Schnitt C-C der Zentrier-, Innenform-, Richt- und Spannscheibe gemäß Fig. 3b,

Fig. 7 einen Schnitt D-D der Zentrier-, Innenform-, Richt- und Spannscheibe gemäß Fig. 3b,

Fig. 8a bis 8c eine perspektivische Darstellung der Zentrier-, Innenform-, Richt- und Spannscheibe in ungespanntem und gespanntem Zustand als vollständige und demontierte Funktionseinheit,

Fig. 9a und 9b Seitenansichten des Rührreibschweißwerkzeugs mit Verweis auf die Schnitte E-E und F-F,

Fig. 10 einen Schnitt E-E des Rührreibschweißwerkzeugs gemäß Fig. 9a,

Fig. 11 einen Schnitt F-F des Rührreibschweißwerkzeugs gemäß Fig. 9b,

Fig. 12 eine Einzelheit B der Fig. 10 und

Fig. 13 eine schematische Darstellung der erfindungsgemäßen Anlage in Seitenansicht.

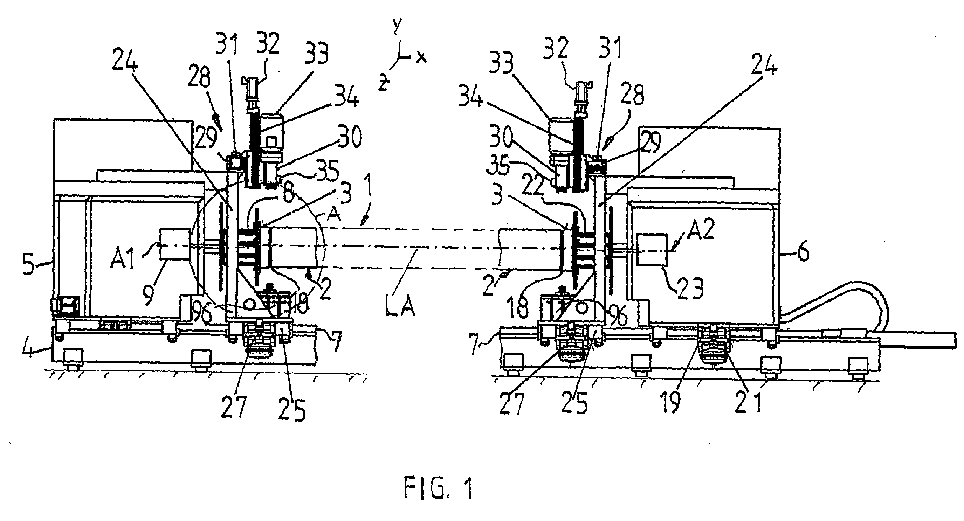

Die Fig. 1 zeigt die erfindungsgemäße Anlage schematisch in Seitenansicht mit Bestückung einer durch Rührreibschweißen im Stumpfstoß zu verbindenden Flansch-Rohr-Flansch-Anordnung 1, die sich in diesem Beispiel aus einem Aluminiumrohr 2 der Qualität EN-AW6083 und zwei an den Enden des Aluminiumrohres 2 anzusetzende Flansche 3 der Gussqualität AlSi7Mg0.3 zusammensetzt. Das Aluminiumrohr 1 und die Flansche 3 haben einen identischen Innendurchmesser. Die Wandstärke von Flansch und Rohr beträgt 7 mm und die Länge des Rohrs 8600 mm.
Die erfindungsgemäße Anlage setzt sich im Wesentlichen aus zwei im Abstand voneinander und in Flucht gegenüber angeordneten Einspanneinheiten 5 und 6 zusammen, von denen die Einspanneinheit 5 ortsfest festgelegt und die Einspanneinheit 6 auf an einem Maschinenbett 4 parallel nebeneinander verlegten Laufschienenpaar 7 verfahrbar ist.

Die ortsfeste Einspanneinheit 5, nachfolgend linke Einspanneinheit genannt, besitzt eine Aufnahme 8 für den Flansch 3. Die Aufnahme 8 ist um eine horizontale Drehachse A1 drehbar und wird von einem Direktantrieb 9, beispielsweise einem Synchronmotor, angetrieben.

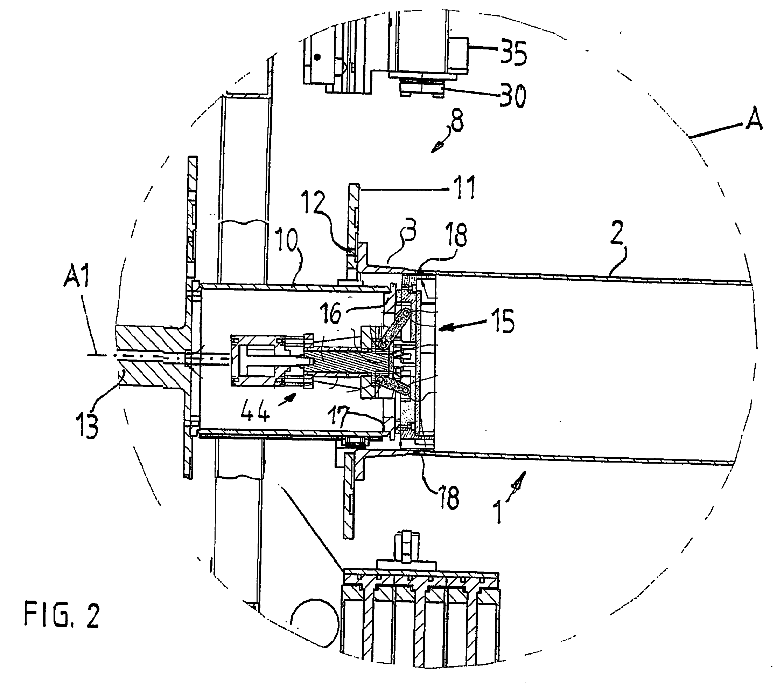

Die Aufnahme 8 besteht -wie Fig. 2 zeigt- aus einer zylindrischen Hülse 10 und einer an der Hülse 10 lösbar befestigten Flanschscheibe 11, welche mindestens einen Lochkreis aus Bohrungen 12 zur Befestigung des Flansches 3 mittels nicht dargestellter Schraubverbindungen aufweist. Es können mehrere Lochkreise mit unterschiedlichen Durchmessern auf der Planscheibe 11 vorgesehen sein, um Flansche 3 verschiedener Abmessungen befestigen zu können.
Die Hülse 10 ist einerends an der als Hohlwelle ausgeführten Antriebswelle 13 des Synchronmotors 9 befestigt, so dass durch diese eine Pneumatikleitung 14 für den pneumatischen Antrieb 44 der Zentrier-, Innenform-, Richt- und Spannscheibe 15 geführt werden kann. Anderenends weist die Hülse 10 einen Befestigungsflansch 16 zur Befestigung der Zentrier-, Innenform-, Richt- und Spannscheibe 15 auf.
Die Planscheibe 11 ist gegenüber dem aufragenden Hülsenende 17 in solch einem Abstand zurückversetzt angeordnet, dass der an der Planscheibe 11 befestigte Flansch 3 mit seinem Rohrteil gegenüber dem Hülsenende 17 vorsteht, wodurch unter dem Stumpfstoß 18 zwischen Flansch 3 und Rohr 2 ein ausreichender Platz zum Einbringen der Zentrier-, Innenform-, Richt- und Spannscheibe 15 verbleibt.

Es wird jetzt wieder auf die Fig. 1 Bezug genommen. Die verfahrbare Einspanneinheit 6, nachfolgend rechte Einspanneinheit 6 genannt, entspricht im Wesentlichen dem beschriebenen Aufbau der linken Einspanneinheit 5, jedoch mit dem Unterschied, dass die rechte Einspanneinheit 6 einen eigenen Antrieb 19, beispielsweise einen Servomotor, zum Verfahren der Einspanneinheit 6 auf dem Laufschienenpaar 7 in Richtung der Einspanneinheit 5, und eine eigene, über ein Proportionalventil 20 auslösbare pneumatische Bremse 21 zum Arretieren der Lage der Einspanneinheit 6 auf dem Laufschienenpaar 7 aufweist.
Die zur rechten Einspanneinheit 6 gehörende Aufnahme 22 entspricht der Aufnahme 8 der linken Einspanneinheit 5, so dass darauf verwiesen werden kann.
Die Aufnahme 22 ist drehbar um die Drehachse A2 und wird von einem eigenen Direktantrieb 23, beispielsweise einem Synchronmotor, angetrieben. Die Drehachse A1 der Aufnahme 8 und die Drehachse A2 der Aufnahme 22 liegen auf einer Flucht sich gegenüber und spannen eine gemeinsame Längsachse auf. Das axiale Einspannen des Rohres 2 zwischen den Flanschen 3 wird beim Anfahren der rechten Einspanneinheit 6 gegen das Stirnende des Rohrs 2 pneumatisch durchgeführt, wobei die Anpresskraft durch Druckzylinder erzeugt und in Abhängigkeit der Dimensionierung von Rohr und Flansche auf Werte zwischen 5000 bis 8000 N eingestellt wird.

Jeder Einspanneinheit 5 bzw. 6 ist ein Brückenträger 24 zugeordnet, der mittels eines Servomotors 25 auf dem Laufschienenpaar 7 -also in x-Richtung- verfahrbar ist und eine durch ein Proportionalventil 26 betätigbare pneumatische Bremse 27 sowie eine pneumatische Einheit 96 zum Versteifen und Ausgleichen von Vibrationen beim Bearbeiten aufweist. Der Brückenträger 24 umgreift die Aufnahmen 8 bzw. 22 und lässt sich somit in x-Richtung in eine exakte Lage über den Stumpfstoß 18 verfahren und arretieren. An der Brücke 28 des Brückenträgers 24 ist ein Kreuzschlitten 29 befestigt, mit dem das Rührreibschweißwerkzeug 30 mittels eines Servomotors 31 in y-Richtung und eines Servomotors 32 in z-Richtung positioniert werden kann. Die zum Rührreibschweißen erforderlichen Anpresskräfte zwischen dem später noch beschriebenen Rührreibschweißschaft bzw. -stift und dem Stumpfstoß 18 werden durch eine mit einem Motor 33 angetriebene Werkzeugspindel 34 aufgebracht.
Jedem Rührreibschweißwerkzeug 30 ist ein Sensor 35 zugeordnet, der die Lage des Stumpfstoßes 18 abtastet, mit seiner Auswerteelektronik die Lage des Stoßes ermittelt und diese an die Hauptsteuerung 87 weiterleitet.

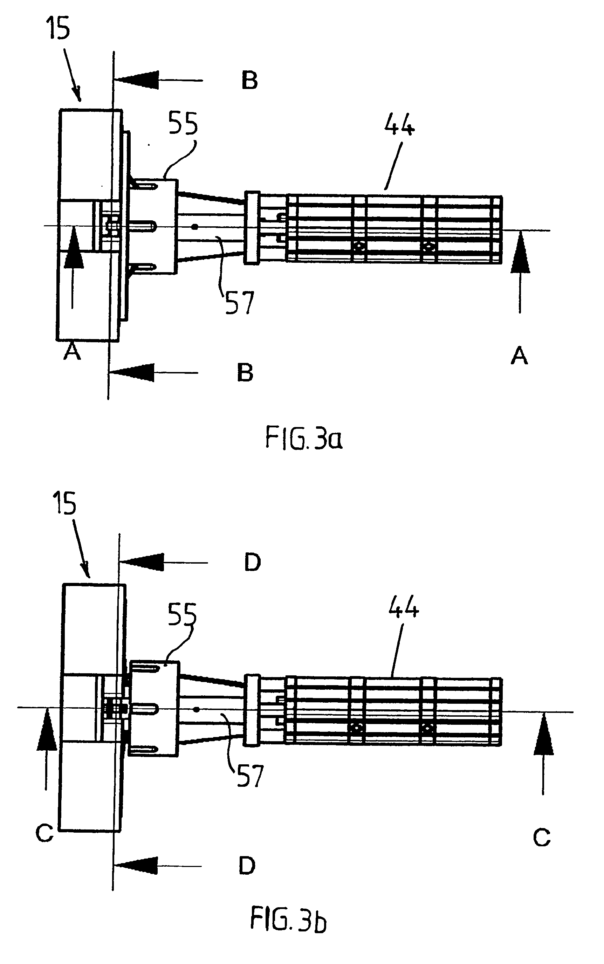

Die Fig. 3a, 3b und 4 bis 8a bis 8c zeigen die pneumatische Zentrier-, Innenform-, Richt- und Spannscheibe 15, die sich aus einem Primärbackenkörper 36 mit einzelnen Primärbacken 37, einem Sekundärbackenkörper 38 mit einzelnen Sekundärbacken 39, Halte- und Gabelelementen 40, die über Primär- und Sekundärhebel 41 bzw. 42 mit einem Stößel 43 kniehebelartig gelenkig verbunden sind, und einem pneumatischen Antrieb 44 für den Stößel 43 zusammensetzt.

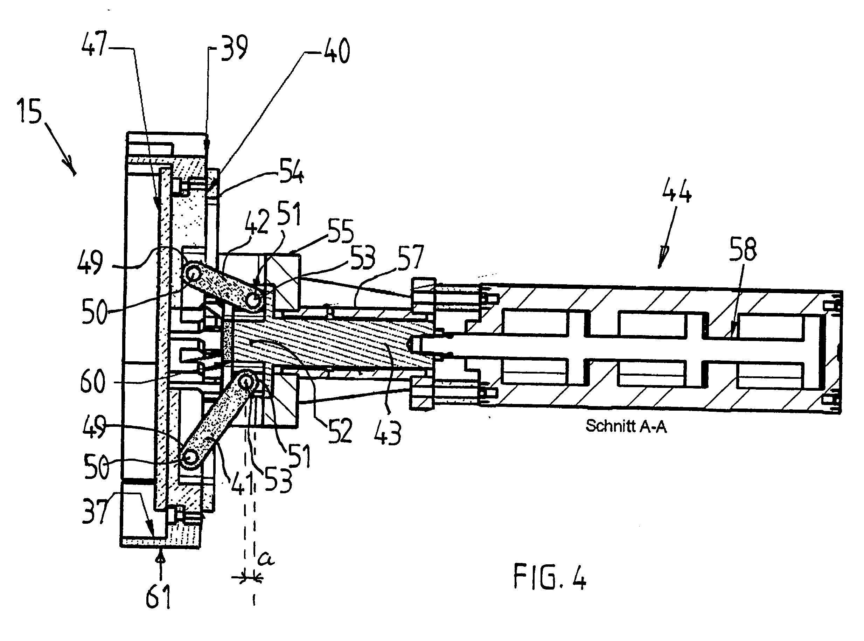

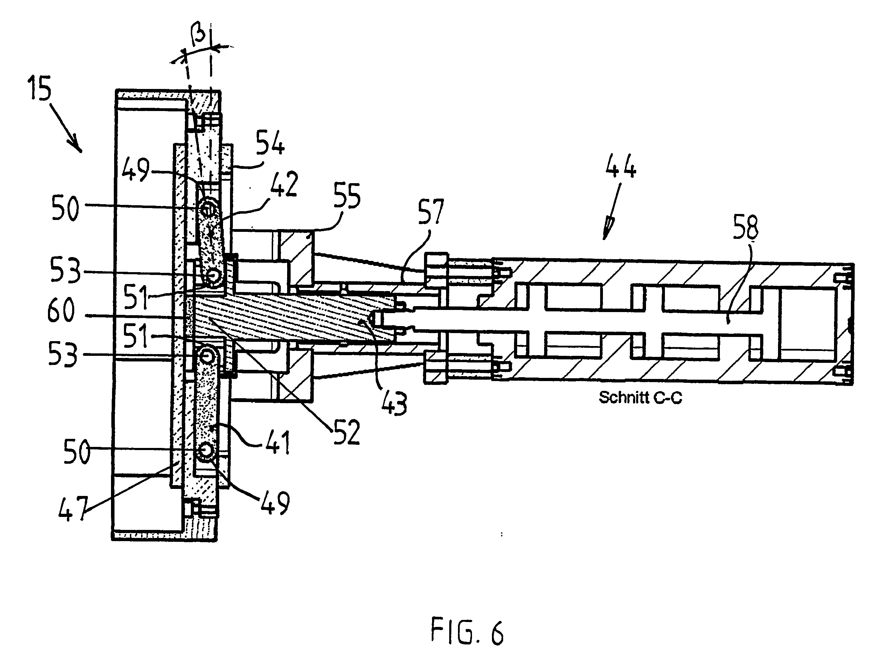

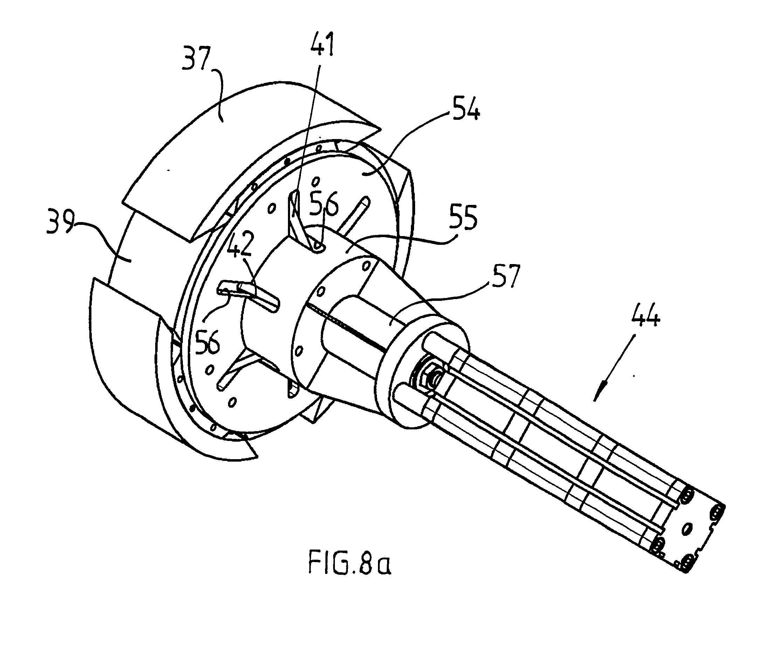

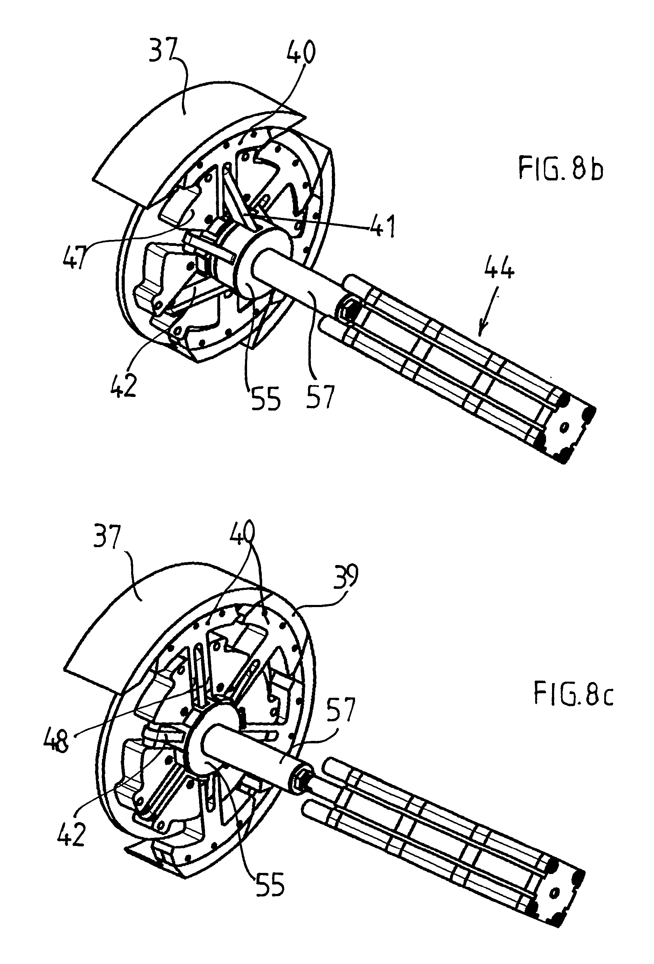

Unter Bezug auf die Fig. 4 und 6 ist zwischen den Gabelarmen 48 des Halte- und Gabelelementes 40 der Primärbacken 37 und der Sekundärbacken 38 jeweils der Primärhebel 41 bzw. Sekundärhebel 42 mit seinem der Primär- bzw. Sekundärbacke zugewandten Ende 49 in der Gabel 48 in einem Gelenk 50 schwenkbar gelagert, das aus einem Zylinderstift, einem Loch in den Hebeln 41 bzw. 42 und entsprechenden Aufnahmebohrungen in den Gabeln 48 gebildet ist.
Das Gelenk 50 befindet sich in Richtung der Kopfseite des Halte- und Gabelelementes 40, so dass die Primär- und Sekundärhebel 41 bzw. 42 in der Lage sind, die Schwenkbewegung innerhalb des zwischen den Gabeln 48 vorhandenen Freiraumes auszuführen.
Die Primär- und Sekundärhebel 41 bzw. 42 sind mit ihrem anderen, dem Primär- bzw. Sekundärbacken abgewandten Ende 51 am Stößelkopf 52 des Stößels 43 jeweils in einem weiteren Gelenk 53 schwenkbar gelagert, das ebenso aus einem Zylinderstift, einem weiteren Loch am Ende 51 der Hebel 41 bzw. 42 und Aufnahmebohrungen im Stößelkopf 52 für den Zylinderstift gebildet wird.
Der Stößelkopf 52 mit seinen Gelenken 53 ist von einem an einer Abstützplatte 54 befestigten Gelenkgehäuse 55 senkrecht gleitverschieblich in Flucht des Zentrums der Zentrier-, Innenform-, Richt-, und Spannscheibe 15 aufgenommen, wobei die Abstützplatte 54 und das Gelenkgehäuse 55 mit zueinander fluchtenden Ausnehmungen 56 versehen sind, durch die die Schwenkbewegung der Hebel 41 bzw. 42 bei einer Bewegung des Stößels 43 verläuft (siehe Fig. 8). Auf dem Gelenkgehäuse 55 ist ein zylindrisches Stößelgehäuse 57 befestigt und abgestützt, in dem der Stößel 43 gleitverschieblich gelagert ist und seine Hubbewegung in Flucht des Zentrums der Zentrier-, Innenform-, Richt- und Spannscheibe 15 ausführen kann. Der Stößel 43 wird durch eine Kolbenstange 58 des pneumatischen Antriebs 44 betätigt.

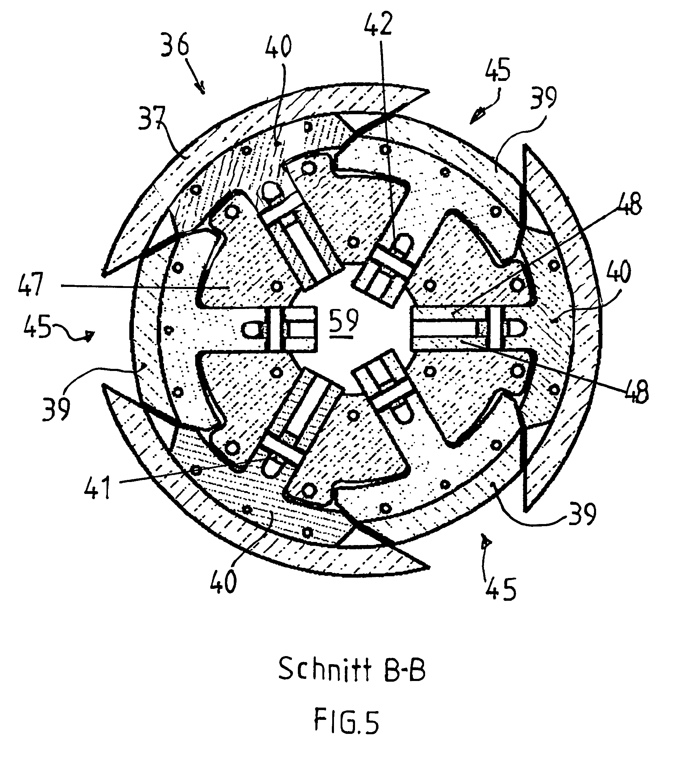

Wie in Fig. 5 gezeigt, sind die mindestens drei Primärbacken 37 auf Lücke 45 im Abstand voneinander kreissegmentförmig am Umfang der Zentrier-, Innenform-, Richt- und Spannscheibe 15 angeordnet und von je einem hammerförmigen Halte- und Gabelelement 40 getragen, das in radial angeordneten Ausnehmungen 46 eines Trägerelementes 47 linear in radialer Richtung verschiebbar einliegt. Bei Bewegung der Kolbenstange 58 in Flucht des Zentrums der Zentrier-, Innenform-, Richt- und Spannscheibe 15 auf den Stößel 43 wird diese Linearbewegung durch die kniehebelartig angelenkten Primär- und Sekundärhebel 41 bzw. 42 in eine radiale Bewegung der Primär- und Sekundärbacken 37 bzw. 39 unter kniehebelartiger Kraftverstärkung umgesetzt.
Die Primärhebel 41 haben gegenüber den Sekundärhebeln 42 eine größere Länge und ihre Gelenke 53 sind gegeneinander in Richtung der Primär- und Sekundärbacken 37, 39 so versetzt angeordnet, so dass bei Bewegung des Stößels 43 in Flucht des Zentrums der Zentrier-, Innenform-, Richt- und Spannscheibe 15 zunächst die Primärbacke 37 in radialer Richtung verschoben und gegen die Innenseite des Flansches 3 bzw. Rohres 4 gedrückt wird, was zunächst eine Zentrierung von Flansch und Rohr im Stumpfstoß 18 bewirkt. Die Zentrierkräfte liegen vorzugsweise zwischen 2000N bis 6000 N. Bedingt durch die kürzere Länge des Sekundärhebels 42 beginnt die radiale Bewegung der Sekundärbacken 39 erst nachdem die Bewegung der Primärbacken 37 begonnen hat und die maximale Anpresswirkung auf den inneren Bereich von Flansch 3 und Rohr 4 wird erreicht, wenn die Primärhebel 41 und die Sekundärhebel 42 zueinander ihre Strecklage erreicht haben. Beispielsweise wird eine Kraftverstärkung gegenüber den Zentrierkräften um etwa das Zehnfache erreicht.
Als zweckmäßig haben sich Längenverhältnisse der Sekundärzur Primärhebel von 1:1,3 erwiesen.
Zum Entspannen der Zentrier-, Innenform-, Richt- und Spannscheibe 15 nimmt der Sekundärhebel 42 in der Strecklage nicht ganz eine 90°-Stellung ein, so dass beim Rückhub des Antriebs zunächst der Sekundärhebel 42 die Sekundärbacken 39 radial nach innen bewegt und danach erst die Primärbacken 37 zurückgezogen werden. Der Anstellwinkel ß des Sekundärhebels 42 liegt bei 1-2°.
Wie Fig. 6 verdeutlicht, ist der Stößelkopf 52 in den von den Primärbacken 37 und Sekundärbacken 39 im Zentrum der Zentrier-, Innenform-, Richt- und Spannscheibe 15 begrenzten Freiraum 59 eingetaucht und hat auf einer am Trägerelement 47 befestigten Anschlagplatte 60 aufgesetzt.

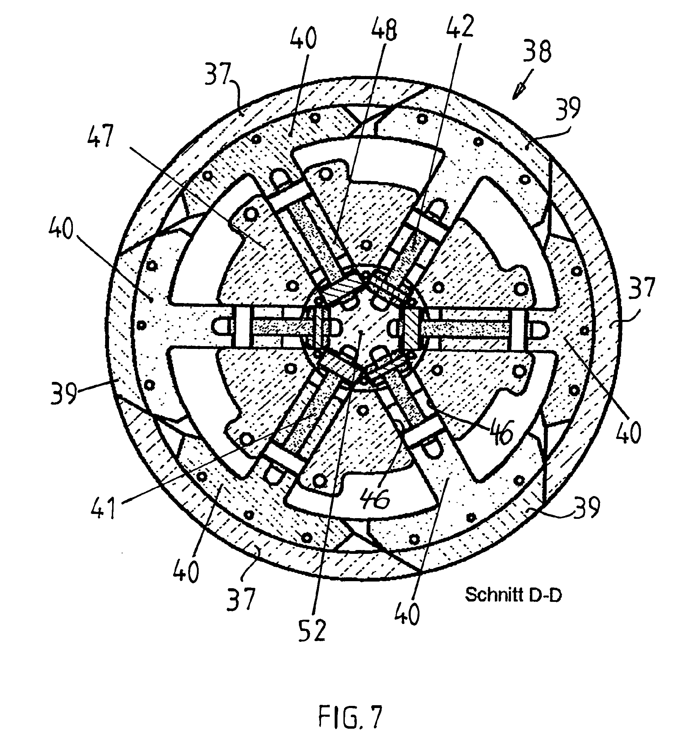

Die Fig. 7 und 8 zeigen die Zentrier-, Innenform-, Richt- und Spannscheibe 15 in ausgefahrenem Zustand. Die Primärbacken 37 und Sekundärbacken 39 bilden entlang ihres äußeren Umfangs einen vollkommenen geschlossenen Stirnbereich 61, der beispielsweise eine Breite zwischen 10 mm bis 50 mm, vorzugsweise 30 mm besitzen kann.
In Bezug auf den Stumpfstoß 18 nimmt die Zentrier-, Innenform-, Richt- und Spannscheibe 15 eine komplexe Funktion wahr, die darin besteht, dass der Stumpfstoß 18 in eine für das Rührreibschweißen definierte Lage gebracht und in dieser Lage während des Rührreibschweißens gehalten wird. Dies bedeutet, dass die Zentrier-, Innenform-, Richt- und Spannscheibe 15 zunächst den Flansch 3 und das Rohr 2 im Stumpfstoß 18 zueinander zentriert, anschließend auftretende Unrundheiten/Ovalitäten von Rohr und Flansch durch ein örtliches Innenformdrücken und Richten im Stoßbereich weitgehend beseitigt sowie diesen Zustand durch Beibehalten der Innenformkräfte während des Rührreibschweißens aufrechterhalten wird, damit der Rührreibschweißstift im Stumpfstoß 18 eine definierte Lage, beispielsweise Eindringtiefe, einnehmen kann. Unabhängig von diesen Funktionen nimmt die Zentrier-, Innenform-, Richt- und Spannscheibe 15 auch die Funktion der Schweißbadsicherung zur Stabilisierung der erweichten Stoßbereiche und des Widerlagers für die von Rührreibschweißwerkzeug 30 aufgebrachten Anpresskräfte wahr.

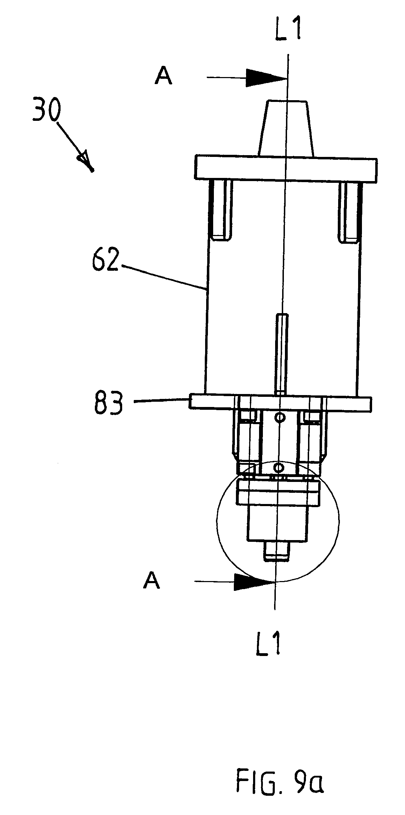

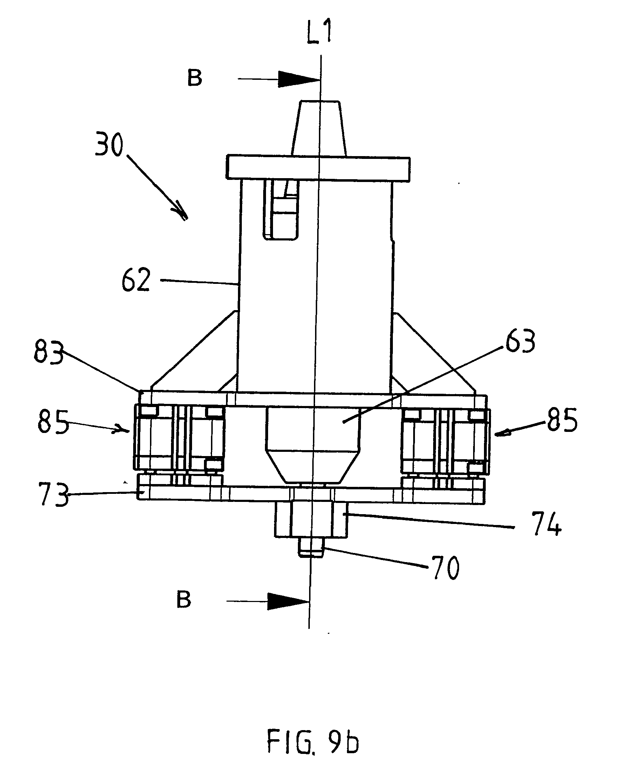

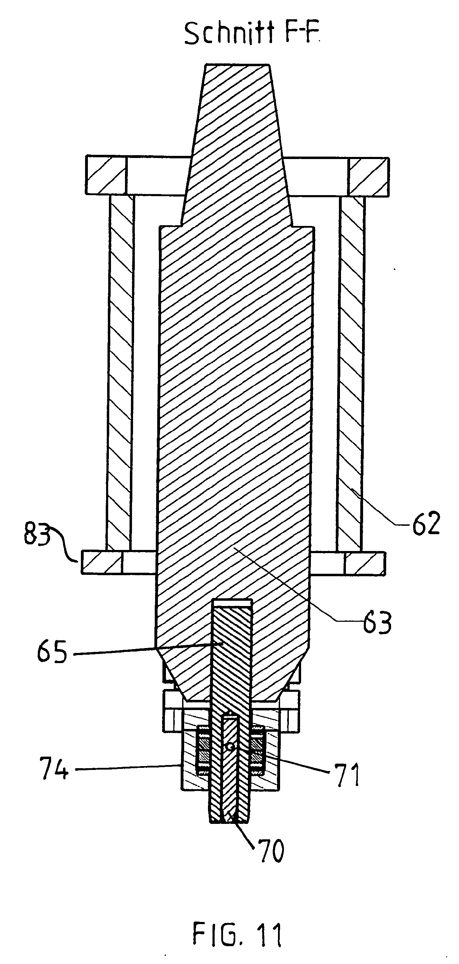

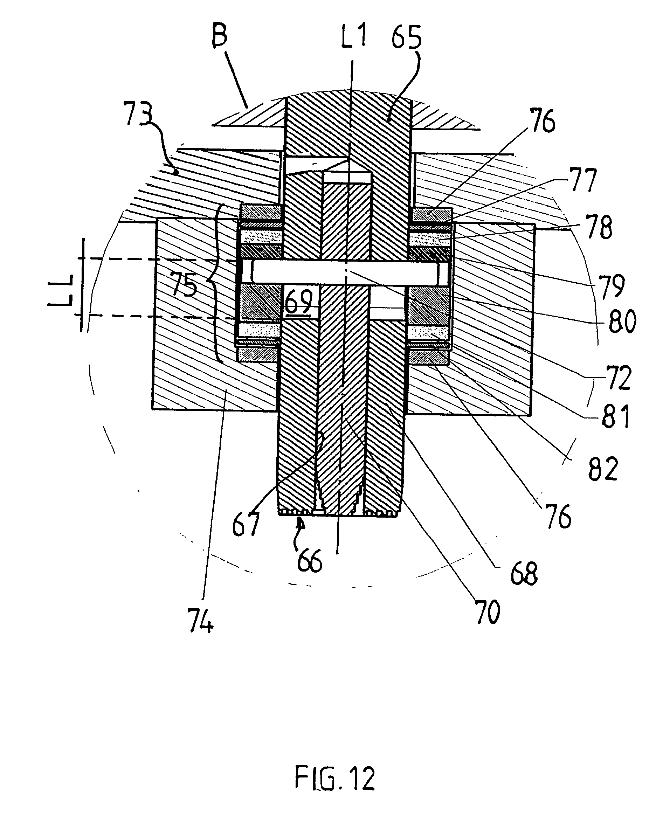

Die Fig. 9a, 9b, 10 bis 12 zeigen das Rührreibschweißwerkzeug 30. das in einem von der Werkzeugspindel 34 gehaltenen Gehäuse 62 untergebracht ist. Im Gehäuse 62 ist ein um seine Längsachse L1 drehbarer Werkzeughalter 63 angeordnet, der vom Antriebsmotor 30 angetrieben wird. Der Werkzeughalter 63 besitzt in Flucht seiner Längsachse L1 eine Aufnahme 64 für einen Schaft 65, welcher in der Aufnahme 64 drehfest befestigt ist, so dass Werkzeughalter 63 und Schaft 65 gemeinsam um die Längsachse L1 rotieren. Die drehfeste Arretierung des Schaftes kann beispielsweise mit einem nicht weiter bezeichneten Gewindestift erfolgen.
Der Schaft 65 besitzt -wie Fig. 12 vergrößert zeigt- eine Schulter 66, die als eine Reibfläche ausgebildet ist. In den Schaft 65 ist in Flucht der Längsachse L1 eine Aufnahme 67 eingearbeitet, in deren Wandung 68 sich zwei diametral koaxial zur Längsachse L1 gegenüberliegende langlochähnliche Aussparungen 69 befinden. In die Aufnahme 67 des Schaftes 65 ist der Rührreibschweißstift 70 eingesetzt, welcher mit einem quer zur Längsachse L1 verlaufenden Loch 71 versehen ist, so dass der Rührreibschweißstift 70 mit einem durch das Loch 71 und die Aussparungen 69 im Schaft 65 geführten Zylinderstift 72 drehfest mit dem Schaft 65 verbunden ist. Entlang der langlochähnlichen Aussparungen 69 kann der Zylinderstift 72 zusammen mit dem Rührreibschweißstift 70 in Flucht der Längsachse L1 eine Relativbewegung gegenüber dem Schaft 65 ausführen.
Die Länge LL und die Lage der Aussparungen 69 bestimmen das Maß der Relativbewegung und damit das Maß, mit dem der Rührreibschweißstift 70 gegenüber der Schulter 66 des Schaftes 65 vorsteht. Durch Bereitstellen von Schäften 65 mit Aussparungen 69 verschiedener Länge und Lage, kann somit ein Rührreibschweißwerkzeug 30 mit unterschiedlichen Eindringtiefen für verschiedene Dickenabmessungen von Flansch Rohr zur Verfügung gestellt werden.

Der rotierende Schaft 65 ist außen in einem an einer Hubplatte 73 befestigten Lager 74 drehbar gelagert. Dieses Lager 74 besteht aus einem zylindrischen Lagerpaket 75, das ein Gehäuse 76, ein oberes und unteres Axiallager 77 bzw. 82, eine obere und untere Wellenscheibe 78 bzw. 81, eine obere und untere Klemmscheibe 79 bzw. 80 umfasst. Der den Rührreibschweißstift 70 durchsetzende Zylinderstift 72 liegt zwischen unterer Klemmscheibe 80 und oberer Klemmscheibe 79 ein, so dass der Zylinderstift 72 axial verschiebbar an seinen Enden klemmend gehalten ist.

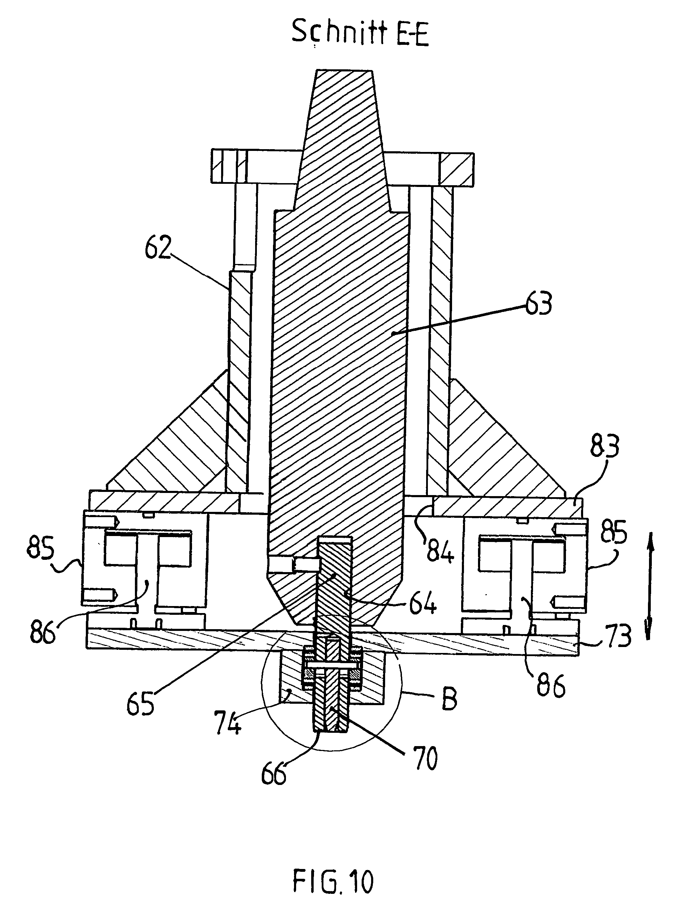

Wie aus der Fig. 10 weiter zu entnehmen ist, besitzt das Gehäuse 62 eine untere Halteplatte 83, die eine Öffnung 84 für das Hindurchführen des Werkzeughalters 63 aufweist. Koaxial und symmetrisch zur Längsachse L1 des Werkzeughalters 63 beabstandet sind zwei Hubmittel 85, beispielsweise pneumatische Hubzylinder, an der Halteplatte 83 befestigt, deren Kolbenstangen 86 die untere Hubplatte 73 mit daran befestigtem Lager 74 axial in Flucht der Längsachse L1 verschiebbar tragen.
Bei Ausführung einer Bewegung der Kolbenstangen 86 kann sich je nach Bewegungsart die Hubplatte 73 senken oder heben. Der Hubweg der Hubplatte 73 wird über die Hubzylinder eingestellt und auf die gewünschte Eindringtiefe des Rührreibschweißstiftes 70 in den Stumpfstoß 18 abgestimmt, so der Rührreibschweißstift 70 im Stumpfstoß 18 entsprechend den Dickenabmessungen von Flansch und Rohr eine definierte Lage einnehmen kann oder aus dem Stumpfstoß 18 zurückziehbar ist. Letzteres ist von wesentlicher Bedeutung, um den Rührreibschweißstift 70 aus dem Stumpfstoß 18 herauszubewegen, ohne ein Loch in der gefügten Stumpfnaht zu hinterlassen.

Die Zustellung des Rührreibschweißwerkzeugs 30 beim Zurückziehen des Rührreibschweißstiftes 70 wird nachfolgend beschrieben. Nach Durchführen des Rührreibschweißens hat die Flansch-Rohr-Flansch-Anordnung 1 mindestens eine Rotation um 360° ausgeführt. Der Rührreibschweißstift 70 wird durch Heben der Hubplatte 73 in den Schaft 65 zurückgezogen, nachdem die Winkellagegeber der Direktantriebe der Einspanneinheiten 5 und 6 die erreichte Winkellage an die Hauptsteuerung weitergeleitet haben, die die Betätigung der pneumatischen Hubzylinder 85 auslöst. Das Rührreibschweißwerkzeug 30 wird dann, ebenfalls von der Hauptsteuerung veranlasst, durch den Servomotor 31 um eine definierte Wegstrecke in y-Richtung aus der Flucht des Stumpfstoßes 18 verfahren, während die eingespannte Flansch-Rohr-Flansch-Anordnung 1 um etwa 20° weiterrotiert. Dies stellt sicher, dass kein Loch im rührreibgeschweißten Stumpfstoß 18 entsteht.

Die Steuerung weist eine Hauptsteuerung 87, die an ein externes Stromnetz 88 und ein Pressluftnetz 89 zur Versorgung der Anlage mit Strom und Pressluft angeschlossen ist, und eine Nebensteuerung 90 auf. Die Hauptsteuerung 87 ist in der linken Einspanneinheit 5 untergebracht, die mit der Nebensteuerung 90 durch eine flexible Verbindungsleitung 91 in Form einer Schleppkette verbunden ist. Von der Verbindungsleitung 91 werden die Daten- und Steuerleitungen 92 bzw. 93 und die Strom- und Pressluftleitungen 94 bzw. 95 aufgenommen, um alle zur rechten Einspanneinheit 6 gehörenden Aggregate mit Strom- und Pressluft zu versorgen, Daten zu übertragen oder auszutauschen und Steuerbefehle weiterzuleiten.

Zur Synchronisation des Direktantriebs 9 der Aufnahme 8 mit dem Direktantrieb 23 der Aufnahme 22 stehen beide Direktantriebe mit der Hauptsteuerung 87 über die separate, direkte und schnelle Datenleitung 92 in Verbindung, so dass beide Aufnahmen 8 bzw. 22 mit gleicher Geschwindigkeit drehen.
Durch die Steuerleitung 93 sind die Servomotore 31 bzw. 32 für den Kreuzschlitten 29, der Motor 33 für die Werkzeugspindel 34 des Rührreibschweißwerkzeugs 30, der Servomotor 25 für den Brückenträger 24, die Sensoren 35 über ihre Auswerteelektronik, die Bremsen 27 und die pneumatischen Einheiten 96 für die Brückenträger 24, die Bremse 21 für die rechte Einspanneinheit 6, die Antriebe 44 für die Zentrier-, Innenform-, Richt- und Spannscheiben 15 über ihre jeweiligen Proportionalventile 26, 20, 97, 98 und 99 mit der Hauptsteuerung 87 verbunden.
Zur Nebensteuerung 90 gehört die Ansteuer- und Auswerteelektronik aller zur rechten Einspanneinheit 6 untergebrachten Aggregate.

Die Direktantriebe 9 und 23 sind zur Ermittlung der Winkellage der Rotation der Flansch-Rohr-Flansch-Anordnung 1 mit je zwei Winkellagegebern versehen, deren Datenleitungen mit der Hauptsteuerung 87 verbunden sind, die die Daten verarbeitet und die Zustellung des Rührreibschweißwerkzeugs 30 entsprechend der detektierten Winkellage auslöst oder stoppt.

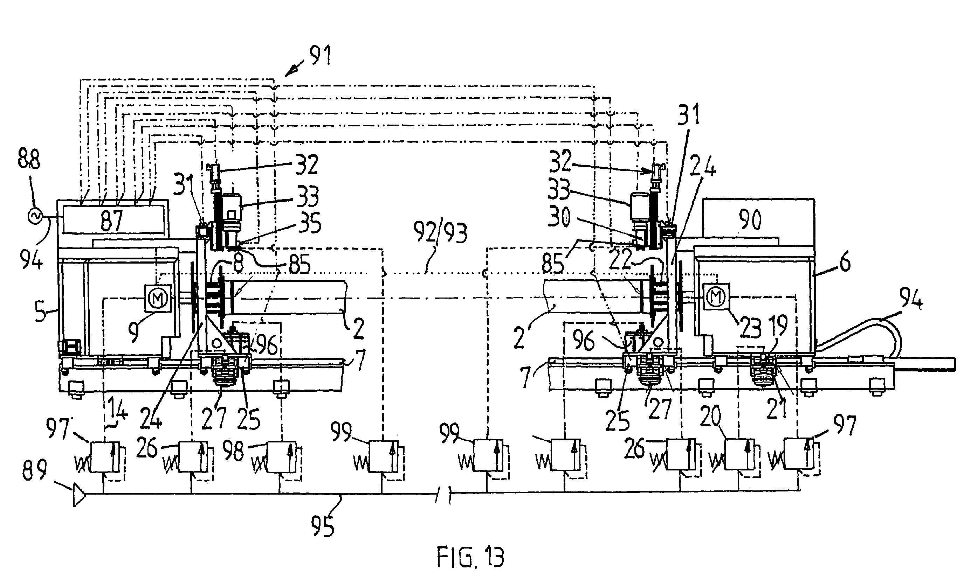

Der Ablauf des erfindungsgemäßen Verfahrens wird nachfolgend mit Hilfe der Fig. 1 in Verbindung mit der Fig. 13 beschrieben.
Die Flansche 3 werden an der Planscheibe 11 der drehbaren Aufnahme 8 der linken Einspanneinheit 5 und an der Planscheibe 11 der drehbaren Aufnahme 22 der rechten Einspanneinheit 6 so befestigt, dass die Längsachsen der Flansche 3 mit den Drehachsen A1 und A2 der Aufnahme 8 bzw. 22 übereinstimmen. Die Zentrier-, Innenform-, Richt- und Spannscheiben 15 werden wie im Abschnitt [0052] beschrieben in das offene Stirnende des Flansches 3 eingeschoben und pneumatisch fixiert.
Dies geschieht dadurch, dass die Zentrier-, Innenform-, Richt- und Spannscheibe 15 mit ihren durch die Lücken 45 voneinander beabstandeten Primärbacken 37 in einem ersten Schritt etwa 65 bis 70% des Innenumfangs von Flansch und Rohr im Stoßbereich erfasst, wodurch der Stumpfstoß 18 von Flansch und Rohr mit einer Zentrierkraft von mindestens 2000 N bis 6000 N zentriert wird. In einem zweiten Schritt werden die Sekundärbacken 39 in die Lücken 46 zwischen den Primärbacken 37 in Richtung Innenwand von Flansch 3 und Rohr 2 radial ausgefahren, so dass der Stirnbereich 61 eine geschlossene Fläche bildet und die kniehebelartig verstärkten Zentrierkräfte des pneumatischen Antriebs 44 von etwa 20000 bis 60000 N auf den Stoßbereich von Flansch und Rohr lenkt. Eventuelle Ovalitäten oder Unrundheiten im Stoßbereich werden eliminiert und eine Geradheit im Stoßbereich erzeugt. Der Stumpfstoß 18 der rotierenden Flansch-Rohr-Flansch-Anordnung 1 nimmt eine definierte Lage ein, die während dem Rührreibschweißen beibehalten wird, weil die Zentrier-, Innenform-, Richt- und Spannscheibe 15 im gespannten Zustand verbleibt bis der Rührreibschweißvorgang beendet ist.
Zum Lösen der Zentrier-, Innenform-, Richt- und Spannscheibe 15 werden zunächst die Sekundärbacken 39 aus dem Bereich zwischen den Primärbacken und dann die Primärbacken 37 radial entgegengesetzt zur Innenwand von Flansch und Rohr eingefahren.

Die rechte Einspanneinheit 6 wird anschließend soweit auf dem Laufschienenpaar 7 verfahren bis der Abstand zwischen den beiden Einspanneinheiten 5 und 6 gegenüber der Rohrlänge des Rohres 2 etwa größer ist, so dass eine ausreichende Montagefreiheit vorhanden ist und das mit einem nicht dargestellten Hebemittel angehobene Rohr 2 bis in die von den Drehachsen A1 und A2 aufgespannte Flucht zwischen den beiden Aufnahmen 8 und 22 abgesenkt werden kann.
Das erfindungsgemäße Verfahren läuft dann wie folgt ab:
a) Erzeugen einer übereinstimmenden Rundheit und Geradheit im Stoßbereich von Flansch und Rohr mit einer Zentrier-, Innenform-, Richt- und Spannscheibe, wobei die Stoßfuge in eine definierte Lage und Form für das Rührreibschweißen mit dem Rührreibschweißstift des Rührreibschweißwerkzeugs gebracht wird;
b) Ausfahren des Rührreibschweißstiftes aus dem Schaft um ein der Eindringtiefe in den Stoß entsprechendes Maß durch eine Hubbewegung relativ zum Schaft vor dem Absenken des Rührreibschweißwerkzeugs auf den Stoß;
c) Vertikales Verfahren des Schaftes mit ausgefahrenem Stift bis die Schulter des Schaftes auf den Stumpfstoß von Flansch und Rohr aufsetzt und eine definierte Anpresskraft erreicht, wobei die eingespannte Flansch-Rohr-Flansch-Anordnung um ihre Längsachse solange rotiert bis der Stift im Stumpfstoß die erforderliche Rührreibschweißtemperatur erzeugt hat;
d) Durchführen des Rührreibschweißens während eines einzigen Umlaufes der eingespannten Flansch-Rohr-Flansch-Anordnung um mindestens 360° unter Einhaltung einer Anpresskraft von 6000 bis 10000 - N, einer Rotationsgeschwindigkeit von 1000 bis 1800 min⁻¹ und einer Vorschubgeschwindigkeit von 0,3 bis 1 m/min;
e) Einziehen des Stiftes in den Schaft unter Einhaltung der Anpresskraft der Schulter auf den Stumpfstoß und Verfahren des gesamten Rührreibschweißwerkzeugs in Flucht des oberhalb der Längsachse liegenden Stumpfstoßes um eine definierte Wegstrecke während die eingespannte Flansch-Rohr-Flansch-Anordnung um etwa 20° weiterrotiert und Anheben des Rührreibschweißwerkzeugs in seine Ausgangslage;
f) Zurückfahren des Rührreibschweißwerkzeugs um die Wegstrecke gemäß Schritt e) und
g) Entspannen und Lösen der Zentrier-, Innenform-, Richt- und Spannmittel, Entnehmen der rührreibgeschweißten Flansch-Rohr-Flansch-Anordnung und Beginn einer neuen Operation.

### Bezugszeichenliste

| | |
|---|---|
| Flansch-Rohr-Flansch-Anordnung | 1 |
| Aluminiumrohr | 2 |
| Flansche | 3 |
| Maschinenbett | 4 |
| Linke (ortsfeste) Einspanneinheit | 5 |
| Rechte (verfahrbare) Einspanneinheit | 6 |
| Laufschienenpaar | 7 |
| Aufnahme an 5 | 8 |
| Direktantrieb für 8 | 9 |
| Hülse | 10 |
| Planscheiben | 11 |
| Bohrungen in 11 | 12 |
| Antriebswelle von 9 | 13 |
| Pneumatikleitung für 44 | 14 |
| Zentrier-, Innenform-, Richt- und Spannscheibe | 15 |
| Befestigungsflansch an 10 | 16 |
| Hülsenende | 17 |
| Stumpfstoß von 2 und 3 | 18 |
| Separater Antrieb für 6 | 19 |
| Proportionalventil für 21 | 20 |
| Pneumatische Bremse von 6 | 21 |
| Aufnahme an 6 | 22 |
| Direktantrieb für 22 | 23 |
| Brückenträger | 24 |
| Servomotor für 24 | 25 |
| Proportionalventil für 27 | 26 |
| Bremse für 24 | 27 |
| Brücke von 24 | 28 |
| Kreuzschlitten | 29 |
| Rührreibschweißwerkzeug | 30 |
| Servomotore für 29 | 31, 32 |
| Antriebsmotor für 30 | 33 |
| Werkzeugspindel | 34 |
| Sensor mit Auswerteelektronik | 35 |
| Primärbackenkörper | 36 |
| Primärbacken | 37 |
| Sekundärbackenkörper | 38 |
| Sekundärbacken | 39 |
| Halte- und Gabelelement | 40 |
| Primärhebel | 41 |
| Sekundärhebel | 42 |
| Stößel | 43 |
| Pneumatischer Antrieb für 15 | 44 |
| Lücke zwischen Primärbacken 37 | 45 |
| Ausnehmungen in 47 | 46 |
| Trägerelement | 47 |
| Gabelarme, Gabel | 48 |
| Kopfseitiges Ende von 41, 42 | 49 |
| Backenseitige Gelenk | 50 |
| Stößelseitiges Ende von 41, 42 | 51 |
| Stößelkopf | 52 |
| Stößelseitiges Gelenk | 53 |
| Abstützplatte | 54 |
| Gelenkgehäuse für 52 | 55 |
| Ausnehmungen in 54, 55 | 56 |
| Stößelgehäuse | 57 |
| Kolbenstange | 58 |
| Freiraum | 59 |
| Anschlagplatte | 60 |
| Stirnbereich von 15 | 61 |
| Gehäuse für 30 | 62 |
| Werkzeughalter von 30 | 63 |
| Aufnahme für Schaft | 64 |
| Schaft von 30 | 65 |
| Schulter an 65 | 66 |
| Aufnahme in 65 | 67 |
| Wandung von 65 | 68 |
| Aussparungen in 68 | 69 |
| Rührreibschweißstift | 70 |
| Loch in 70 | 71 |
| Zylinderstift für 70 | 72 |
| Hubplatte | 73 |
| Lager | 74 |
| Lagerpaket | 75 |
| Gehäuse von 75 | 76 |
| Oberes Axiallager | 77 |
| Obere Wellenscheibe | 78 |
| Obere Klemmscheibe | 79 |
| Untere Klemmscheibe | 80 |
| Untere Wellenscheibe | 81 |
| Unteres Axiallager | 82 |
| Untere Halteplatte von 62 | 83 |
| Öffnung in 83 | 84 |
| Hubmittel, pneumatische Hubzylinder | 85 |
| Kolbenstange von 85 | 86 |
| Steuerung Hauptsteuerung | 87 |
| Stromnetz | 88 |
| Pressluftnetz | 89 |
| Nebensteuerung | 90 |
| Flexible Verbindungsleitung | 91 |
| Datenleitung | 92 |
| Steuerleitung | 93 |
| Stromleitung | 94 |
| Pressluftleitung | 95 |
| Pneumatische Einheit für Brückenträger | 96 |
| Proportionalventil für 44 | 97 |
| Proportionalventil für 96 | 98 |
| Proportionalventil von für 85 | 99 |
| Drehachsen der Aufnahmen | A1, A2 |
| Längsachse Rohr | LA |
| Längsachse/Drehachse von 30 | L1 |
| Länge der Aussparungen 69 | LL |
| Raumrichtung | x, y, z |
| Versatzmaß der Gelenke 53 | a |
| Anstellwinkel des Sekundärhebels | β |

## Patentansprüche

1. Verfahren zum Herstellen einer Stumpfstoßverbindung zwischen rotationssymmetrischen Körpern, beispielsweise an einer Flansch-Rohr-Flansch-, Flansch-Rohr- oder Rohr-Rohr-Anordnung, mittels Rührreibschweißen, bei dem die rotationssymmetrischen Körper (2,3) auf Stoß durch Einspannmittel fixiert und um eine gemeinsame Längsachse (LA) durch Antriebsmittel (9,23) in Rotation versetzt werden, während ein auf jeden Stumpfstoß (18) mit Anpresskraft absenkbarer rotierender Schaft (65) mit einem gegenüber dem Schaft (65) in den oder aus dem Stumpfstoß (18) vorschieb- oder zurückziehbaren rotierenden Stift (70) eines in x-, y- und z-Richtung zustellbaren Rührreibschweißwerkzeugs (30) die Materialbereiche des Stoßes (18) erweicht, rührt und innerhalb eines Umlaufes miteinander verbindet, wobei die Reaktionskraft für die Anpresskraft von einer eine unter dem Stumpfstoß gegen die Innenwandung der Körper (2,3) spann- und lösbaren Schweißbadsicherung aufgebracht wird, und die Rotationsgeschwindigkeit der Körper (2,3), die Drehgeschwindigkeit und die Anpresskraft von Stift (70) und des Schaftes (65) von einer Steuerung zentral eingestellt werden, **dadurch gekennzeichnet, dass** nach dem Zentrieren ein örtliches Verformen des Stoßbereiches der unter axialen Einspannkräften gehaltenen Körper (2,3) durch ein radiales Innenformdrücken und Richten mit einer Zentrier-, Innenform-, Richt- und Spannscheibe (15) mittels kniehebelartiger Kraftverstärkung der Zentrierkraft auf eine das örtliche Verformen bewirkende Innenformkraft durchgeführt wird und diese Innenformkraft im Stoßbereich der Körper (2,3) solange aufrechterhalten werden bis das Rührreibschweißen beendet ist.

2. Verfahren nach Anspruch 1, **gekennzeichnet durch** folgende Schritte:
a) Erzeugen einer nahezu übereinstimmenden Rundheit und Geradheit im Stoßbereich der nichtrotierenden aneinander auf Stumpfstoß eingespannten Körper (2,3) mit dem Zentrier-, Innenform-, Richt- und Spannmittel (15), wobei der Stumpfstoß (18) in eine definierte Lage, Form und in Abhängigkeit der Abmessungen der Körper (2,3) für den Rührreibschweißstift (70) des Rührreibschweißwerkzeugs gebracht wird;
b) Ausfahren des Rührreibschweißstiftes (70) aus dem Schaft (65) um ein entsprechendes Maß **durch** eine Hubbewegung relativ zum Schaft vor dem Absenken des Rührreibschweißwerkzeugs (30) auf den Stumpfstoß (18) der rotierenden Körper (2,3), um eine in Abhängigkeit von Lage, Form und Geometrie des Stumpfstoßes definierte Eindringtiefe zu erreichen;
c) Vertikales Verfahren des Schaftes (65) mit ausgefahrenem Stift (70) bis die Schulter (66) des Schaftes (65) auf den Stumpfstoß (18) der rotierenden Körper (2,3) aufsetzt und eine definierte Anpresskraft von ............ N erreicht, wobei die eingespannten Körper (2,3) um ihre Längsachse (LA) solange rotieren bis der Stift (70) im Stumpfstoß (18) die erforderliche Rührreibschweißtemperatur erzeugt hat;
d) Durchführen des Rührreibschweißens während eines einzigen Umlaufes der eingespannten rotationssymmetrischen Körper (2,3) um mindestens 360° unter Einhaltung einer Anpresskraft von 6000 bis 10000 N, einer Rotationsgeschwindigkeit von 1000 bis 1800 min⁻¹ und einer Vorschubgeschwindigkeit von 0,3 bis 1 m/min;
e) Einziehen des Stiftes (18) in den Schaft (65) unter Einhaltung der Anpresskraft der Schulter (66) auf den Stumpfstoß (18) und Verfahren des Rührreibschweißwerkzeugs (30) gegenüber der Lage des Stumpfstoßes (18) um eine definierte Wegstrecke während die eingespannten Körper (2,3) um etwa 20° weiterrotieren und Anheben des Rührreibschweißwerkzeugs (30) in seine Ausgangslage;
f) Zurückfahren des Rührreibschweißwerkzeugs (30) um die Wegstrecke gemäß Schritt e) und
g) Entspannen und Lösen der Zentrier-, Innenform-, Richt- und Spannmittel (15), Entnehmen der rührreibgeschweißten Körper (2,3) und Beginn einer neuen Operation.

3. Verfahren nach Anspruch 1 oder 2, **dadurch gekennzeichnet, dass** das Zentrieren, Innenformdrücken, Richten und Spannen der rotationssymmetrischen Körper (2,3) mit der Zentrier-, Innenform-, Richt- und Spannscheibe (15) in einem zweistufigen Vorgang durchgeführt wird, bei dem in einem ersten Schritt etwa 65 bis 70% des zum Stoßbereich gehörenden Innenumfangs der Körper (2,3) mittels durch Lücken (45) voneinander beabstandeter Primärbacken (37) durch eine Zentrierkraft zwischen 2000 N bis 6000 N zum Zentrieren beaufschlagt und in einem zweiten Schritt die erforderlichen Innenformkräfte auf den gesamten Innenumfang im Stoßbereich durch ein radiales Ausfahren von Sekundärbacken (39) in die Lücken (45) zwischen den Primärbacken (37) mittels kniehebelartiger Kraftverstärkung auf mindestens das Zehnfache der Zentrierkraft aufgebracht werden, wobei der Stirnbereich (61) der Zentrier-, Innenform-, Richt- und Spannscheibe (15) eine geschlossene Fläche für das Innenformdrücken und Richten auf eine übereinstimmende Geometrie und Form im Stoßbereich bildet, und dass beim Lösen der Scheibe (15) zunächst die Sekundärbacken (39) aus dem Bereich zwischen den Primärbacken (37) und dann die Primärbacken (37) entgegengesetzt zur Innenwand der Körper (2,3) eingefahren werden.

4. Verfahren nach Anspruch 1, **dadurch gekennzeichnet, dass** als Einspannmittel für die Körper (2,3) je eine von durch einen Direktantrieb (9,23) angetriebene, um die Längsachse (LA) der Körper (2,3) drehbare Aufnahme (8,22) umfassende, gegeneinander ausgerichteter Einspanneinheiten (5,6) eingesetzt werden, die entlang der Drehachsen (A1,A2) der Aufnahmen (8,22) die gemeinsame Längsachse (LA) aufspannen, wobei eine Einspanneinheit (5) ortsfest ist und die andere (6) gegen letztere in Flucht der Drehachsen (A1,A2) unter Bildung des Stumpfstoßes (18) so verfahren wird, dass die eingespannten Körper (2,3) gemeinsam in Rotation versetzt werden können.

5. Verfahren nach Anspruch 1 und 4, **dadurch gekennzeichnet, dass** als Antriebsmittel für die Aufnahmen (8,22) Synchronmotore eingesetzt werden, welche die Aufnahmen (8,22) synchron mit gleicher Drehzahl antreiben, so dass die Stumpfstöße (18) an beiden Enden der rotationssymmetrischen Körper (2,3) simultan bearbeitet werden können.

6. Verfahren nach Anspruch 1 und 4, **dadurch gekennzeichnet, dass** das axiale Einspannen der rotationssymmetrischen Körper (2,3) pneumatisch, hydraulisch oder elektrisch durchgeführt wird, wobei die Anpresskraft durch Druckzylinder erzeugt und in Abhängigkeit der Dimensionierung der rotationssymmetrischen Körper (2,3) mit der Steuerung auf Werte zwischen 5000 bis 8000 N eingestellt wird.

7. Verfahren nach Anspruch 1, **dadurch gekennzeichnet, dass** die Winkellage der Rotation der rotationssymmetrischen Körper (2,3) um die Längsachse (LA) durch einen Winkellagegeber der Direktantriebe (9,23) ermittelt und an die Steuerung zum Zustellen des Rührreinschweißwerkzeugs (30) in x-, y- und z-Richtung weitergeleitet wird.

8. Verfahren nach Anspruch 1 , **dadurch gekennzeichnet, dass** die Lage des Stumpfstoßes (18) der aneinander gespannten Körper (2,3) durch eine Messoperation, eine Anordnung des Stoßes in einer definierten Fix-Lage oder durch Abtasten des Stumpfstoßes (18) durch je einen Sensor (35) in Rotationsrichtung, Ermitteln der momentanen Lage des Stumpfstoßes (18) durch Verarbeiten der Sensordaten mit einer Auswerteelektronik und Weiterleiten dieser Daten an die Steuerung zur Regelung der Position des Reibrührschweißwerkzeugs in x-, y- und z-Richtung ermittelt wird.

9. Verfahren nach Anspruch 8, **dadurch gekennzeichnet, dass** als Sensor (35) ein Laser-Scanner, ein Bild-Sensor oder Linien-Laser eingesetzt wird.

10. Verfahren nach Anspruch 1, **dadurch gekennzeichnet, dass** als Werkstoff für die rotationssymmetrischen Körper (2,3) Leichtmetalle oder Leichtmetalllegierungen wie Aluminium, Aluminium-Magnesium-, Aluminium-Magnesium-Silizium-Legierungen, Kupferlegierungen oder andere Legierungen aus Eisen oder Nichteisenmetalle eingesetzt werden.

11. Anlage zum Herstellen einer Stumpfstoßverbindung zwischen rotationssymmetrischen Körpern mittels Rührreibschweißens zum Durchführen des Verfahrens nach Anspruch 1, mit Einspanneinheiten (5,6), an denen je eine an einer Aufnahme (8,22) fixierter rotationssymmetrischer Körper (2,3) durch einen Direktantrieb (9,23) drehbar um seine mit der Drehachse (A1,A2) der Aufnahme (8,22) zusammenfallende Längsachse (LA) angeordnet ist, wobei die Einspanneinheiten (5,6) zueinander in Flucht auf die Längsachse ausgerichtet sind und eine gemeinsame Drehachse aufspannen, wobei die Einspanneinheit (5) ortsfest und die andere (6) gegen letztere zum axialen Einspannen eines rotationssymmetrischen Körpers (2) zwischen den an den Aufnahmen (8,22) fixierten rotationssymmetrischen Körpern (3) unter Bildung von Stumpfstößen (18) durch einen Antrieb (9,23) auf einem Laufschienenpaar (7) verfahrbar ausgebildet ist, so dass der eingespannte rotationssymmetrische Körper (2) mit dem an der Aufnahme (5,6) fixierten Körper (3) eine Rotation um die Längsachse (LA) ausführen kann, einem jeder Einspanneinheit (5,6) zugeordneten Rührreibschweißwerkzeug (30), das in Bezug auf den jeweiligen Stumpfstoß (18) durch einen Kreuzschlitten (29) horizontal und vertikal zustellbar ist und einen senkrecht zur Längsachse drehbaren, von einem Gehäuse (62) aufgenommenen Werkzeughalter (63) aufweist, in dem ein mit einer Schulter (66) versehener Schaft (65) mit eingesetztem Rührreibschweißstift (70) angeordnet ist, einer Schweißbadsicherung (15), die im Inneren der Körper (2,3) unterhalb des Stumpfstoßes (18) angeordnet ist, und einer Steuerung (87), die mit den Direktantrieben (9,23) der Aufnahmen (8,22) und den Antrieben (31,32,33) für das Rührreibschweißwerkzeug (30) zum Einstellen der Anpresskräfte und der Rotationsgeschwindigkeit der Körper (2,3), sowie der Zustellung des Rührreibschweißwerkzeugs (30) und dessen Drehgeschwindigkeit in Verbindung steht, **dadurch gekennzeichnet, dass** die Schweißbadsicherung als eine Zentrier-, Innenform-, Richt- und Spannscheibe (15) zum Erzeugen einer übereinstimmenden Rundheit und Geradheit im Stoßbereich der aneinanderstoßenden Körper ausgebildet ist, und dass dem Werkzeughalter (63) eine Hubplatte (73) zugeordnet ist, an deren vom Werkzeughalter (63) abgewandten Unterseite eine den Schaft (65) umfassendes Lager (74) zur axial drehbaren Lagerung des Schaftes (65) und mindestens zwei symmetrisch zum Schaft (65) zwischen der dem Werkzeughalter (63) zugewandten Oberseite der Hubplatte (73) und der Gehäuseplatte (83) angeordnete Hubmittel (85) zum Ausführen einer gemeinsamen Hubbewegung von Hubplatte (73) und Lager (74) vorgesehen sind, wobei im Schaft (65) der Rührreibschweißstift (70) relativ zum Schaft (65) axial verschiebbar angeordnet ist, derart, dass die Spitze des Rührreibschweißstiftes (70) bei Ausführen der Hubbewegung von Hubplatte (73) und Lager (74) eine definierte Eindringtiefe in den Stumpfstoß (18) in Abhängigkeit der Dickenabmessung der rotationssymmetrischen Körper (2,3) und der Lage, Form und Geometrie des Stumpfstoßes (18) erreicht.

12. Anlage nach Anspruch 11, **dadurch gekennzeichnet, dass** der Werkzeughalter (63) in Flucht seiner Rotationsachse eine Aufnahme (64) aufweist, in der der Schaft (65) drehfest fixiert ist, welcher seinerseits in Richtung der Rotationsachse eine Stiftaufnahme (67) für den Rührreibschweißstift (70) besitzt und in seiner Wandung (68) mit diametral gegenüberliegenden langlochähnlichen Aussparungen (69) versehen ist, in denen ein quer zur Rotationsrichtung angeordneter, den Rührreibschweißstift (70) durchsetzender Zylinderstift (72) axial geführt und im Lager (74) in einem Lagerpaket (75) aufgenommen ist, das ein Gehäuse (76) für das Lagerpaket, ein oberes und unteres Axiallager (77,82), obere und untere Wellenscheiben (78,81) und obere und untere Klemmscheiben (79,80) umfasst, zwischen denen der Zylinderstift (72) klemmend gehalten ist.

13. Anlage nach Anspruch 12, **dadurch gekennzeichnet, dass** ein Satz von Schäften (65) mit Aussparungen (69) verschiedener Lage und Länge zur Einstellung der Eindringtiefe des Rührreibschweißstiftes (70) auf unterschiedliche Dickenabmessungen der Körper (2,3) vorgesehen ist.

14. Anlage nach Anspruch 11 und 12, **dadurch gekennzeichnet, dass** das Hubmittel zum relativen axialen Verschieben des Rührreibschweißstiftes (70) gegenüber dem Schaft (65) pneumatische, hydraulische oder elektrische Hubzylinder (85) sind.

15. Anlage nach Anspruch 11, **dadurch gekennzeichnet, dass** die Zentrier-, Innenform-, Richt- und Spannscheibe (15) umfasst:
a) einen Primärbackenkörper (36) aus mindestens drei Primärbacken (37), die unter Bildung von Lücken (45) kreissegmentförmig am Umfang der Scheibe (15) angeordnet sind und von je einem sich in Richtung Zentrum der Scheibe (15) erstreckendes hammerförmige Halte- und Gabelelement (40) radial gehalten sind, an der ein Primärhebel (41) mit seinem einen Ende (49) schwenkbar befestigt ist,
b) einen Sekundärbackenkörper (38) aus mindestens drei Sekundärbacken (39), die von je einer sich in Richtung Zentrum der Scheibe (15) erstreckenden Halte- und Gabelelement (40) radial gehalten sind, an der ein Sekundärhebel (42) mit seinem einen Ende (41) schwenkbar befestigt ist, wobei die Sekundärbacken (39) zueinander versetzt entlang des Umfangs so angeordnet sind, dass sie die Lücken (45) zwischen zwei Primärbacken (37) schließen können,
c) ein Trägerelement (47) mit radial angeordneten Ausnehmungen (46) zum Aufnehmen und Verschieben der Halte- und Gabelelemente (40) der Primär- und Sekundärbacken (37,39) in radialer Richtung,
d) einen senkrecht in einem Richtung Zentrum der Scheibe (15) verschiebbaren Stößel (43), an dem die stößelseitigen Enden (51) der Primär- und Sekundärhebel (41,42) für die Primär- und Sekundärbacken (37,39) radial schwenkbar gehalten sind,
e) einen pneumatischen, hydraulischen oder elektrischen Antrieb (44) für den Stößel (43), um die Zentrier-, Innenform-, Richt- und Spannkräfte zu erzeugen und die Primärbacken (37) und Sekundärbacken (39) radial gegen die inneren Flächen der aneinanderstoßenden Körper (2,3) zum Erzeugen einer nahezu übereinstimmenden Rundheit und Geradheit im Stoßbereich der aneinanderstoßenden Körper (2,3) zu spannen oder zu entspannen.

16. Anlage nach Anspruch 15, **dadurch gekennzeichnet, dass** der Sekundärhebel (42) gegenüber dem Primärhebel (41) ein Längenverhältnis von mindestens 1 : 1,3 aufweist, wobei das stößelseitige Gelenk (53) des Primärhebels (41) um ein definiertes Maß (a) gegenüber dem stößelseitigen Gelenk (53) des Sekundärhebels (42) in Richtung Primär- bzw. Sekundärbacken (37,39) axial verschoben angeordnet ist und der Sekundärhebel (42) in seiner Strecklage einen Anstellwinkel (ß) von 1 bis 2° aufweist.

17. Anlage nach Anspruch 11, **dadurch gekennzeichnet, dass** das Rührreibschweißwerkzeug (30) in y- und z-Richtung am Kreuzschlitten (29) durch Servomotore (31,32) und in y-Richtung an einer Spindel (34) durch einen Motor (33) verfahrbar angeordnet ist, wobei der das Rührreibschweißwerkzeug (30) tragende Kreuzschlitten (29) an einem Brückenträger (24) festgelegt ist, der in Richtung Längsachse (LA) der Körper (x-Richtung) auf dem zwischen den Einspanneinheiten (5,6) am Maschinenbett (4) verlegten Laufschienenpaar (7) durch einen Servomotor (25) verfahrbar ausgebildet und mit einer pneumatischen Bremse (27) versehen ist sowie eine pneumatische Einheit (96) zur Stabilisierung aufweist.

18. Anlage nach Anspruch 11, **dadurch gekennzeichnet, dass** die Aufnahme (22) der verfahrbaren Einspanneinheit (6) durch mindestens einen pneumatischen Druckzylinder in Flucht der Längsachse (LA) der Körper (2,3) axial beaufschlagbar ausgebildet ist, wobei der Druckzylinder über ein Proportionalventil zur Einstellung der Anpresskraft mit der Steuerung (87) verbunden ist.

19. Anlage nach Anspruch 11, **dadurch gekennzeichnet, dass** die Steuerung in eine an ein externes Strom- und Pressluftnetz (88,89) angeschlossene, in der ortsfesten Einspanneinheit (5) angeordnete Hauptsteuerung (87) und eine in der verfahrbaren Einspanneinheit (6) angeordnete Nebensteuerung (90) aufgeteilt sind, wobei die Hauptsteuerung (87) über eine, die Daten- und Steuerleitungen (92,93) und Pneumatikleitungen (14) aufnehmende flexible Verbindungsleitung (91) mit der Nebensteuerung (90) zum Versorgen der verfahrbaren Einspanneinheit (6) mit Strom und Pressluft sowie zur Übertragung von Steuerbefehlen und zum Datenaustausch in Verbindung steht.

20. Anlage nach Anspruch 19, **dadurch gekennzeichnet, dass** die Direktantriebe (9,23) für die Aufnahmen (8,22) der ortsfesten und verfahrbaren Einspanneinheit (5,6) Synchronmotore sind, die jeweils mit Winkellagegebern zur Ermittlung der Winkellage der Rotation der Körper (2,3) versehen und durch eine separate Steuerleitung mit der Hauptsteuerung (87) verbunden sind.

21. Anlage nach Anspruch 20, **dadurch gekennzeichnet, dass** die Servomotore (31,32) für die Kreuzschlitten (29) und Rührreibschweißwerkzeuge (30), der Servomotor (25) zum Verfahren der Einspanneinheit (6), der Antrieb (44) für die Zentrier-, Innenform-, Richt- und Spannscheibe (15), die Hubmittel (85) für den Rührreibschweißstift (70), die pneumatischen Bremsen (27) und Einheiten (96) für die Brückenträger (24) der Kreuzschlitten (29), die pneumatischen Bremse (21) der verfahrbaren Einspanneinheit (6) sowie die Druckzylinder zum axialen Einspannen der rotationssymmetrischen Körper (2,3) über ihre jeweilige Ansteuerelektronik bzw. Proportionalventile (20, 26, 97, 98, 99) durch eine weitere Steuerleitung (93) mit der Hauptsteuerung (87) verbunden sind.

22. Anlage nach Anspruch 11, **dadurch gekennzeichnet, dass** jedem Rührreibschweißwerkzeug (30) eine Sensor (35), vorzugsweise ein Laser-Scanner, ein Bild-Sensor oder Linien-Laser, zugeordnet, dessen Auswerteelektronik mittels Graustufenanalyse die Lage des Stumpfstoßes (18) in Rotationsrichtung ermittelt und diese an die Hauptsteuerung (87) weiterleitet.
